# EUROPEAN PATENT APPLICATION

(11) **EP 4 697 165 A1**
(43) Date of publication of application: **18.02.2026**
(21) Application number: 24847812.5
(22) Date of filing: 13.06.2024
(51) Int. Cl.: G06F 9/451

(54) **LIGHT-SHADOW EFFECT DISPLAY METHOD AND ELECTRONIC DEVICE**

(30) Priority: 31.07.2023 CN 202310963290
(71) Applicant: Huawei Technologies Co., Ltd., Shenzhen, Guangdong 518129 (CN)
(72) Inventor: FAN, Zhenhua, Shenzhen, Guangdong 518129 (CN); CAO, Yuan, Shenzhen, Guangdong 518129 (CN); ZHANG, Chao, Shenzhen, Guangdong 518129 (CN)
(74) Representative: Thun, Clemens
(86) International application number: PCT/CN2024/099031
(87) International publication number: WO 2025/025849

(57) **Abstract**

This application relates to the field of terminal technologies, and provides a light and shadow effect display method and an electronic device. In this application, a light and shadow effect can be adaptively displayed based on preset lighting information and current display information. In this way, an interface light and shadow effect is enriched, and user experience is improved. The method includes the following steps: The electronic device detects a first operation of a user, and determines to refresh a first interface being displayed. The electronic device obtains lighting information and current display information, where the lighting information is a preconfigured global illumination definition. The electronic device performs lighting rendering based on the lighting information and the current display information. Then the electronic device displays a second interface, where a first component in the second interface has a light and shadow effect formed after the lighting rendering.

## Description

This application claims priority to Chinese Patent Application No. 202310963290.9, filed with the China National Intellectual Property Administration on July 31, 2023 and entitled "LIGHT AND SHADOW EFFECT DISPLAY METHOD AND ELECTRONIC DEVICE", which is incorporated herein by reference in its entirety.

### TECHNICAL FIELD

Embodiments of this application relate to the field of terminal technologies, and in particular, to a light and shadow effect display method and an electronic device.

### BACKGROUND

With development of terminal technologies, a virtual light source is preset in an electronic device, and some presentation means are introduced from a real physical world, to achieve a light and shadow display effect of a human-machine interaction interface (graphical user interface, GUI) of the electronic device. For example, a control shadow is displayed based on a preset virtual light source and a Z-axis altitude of the control. In this way, the display effect is enriched, and user experience is improved.

However, currently, the light and shadow display effect is limited to only some controls of simple shapes. For example, only a circular control and a rounded rectangular control support shadow display, and a better light and shadow effect of the GUI cannot be achieved.

### SUMMARY

To resolve the foregoing technical problem, this application provides a light and shadow effect display method and an electronic device. According to the technical solutions provided in this application, a light and shadow effect is adaptively displayed based on preset lighting information and current display information. In this way, a GUI light and shadow effect is enriched, and user experience is improved.

To achieve the foregoing technical objective, this application provides the following technical solutions.

According to a first aspect, a light and shadow effect display method is provided and applied to an electronic device. The method includes: detecting a first operation of a user, and determining to refresh a first interface being displayed; obtaining lighting information and current display information, where the lighting information is a preconfigured global illumination definition; performing lighting rendering based on the lighting information and the current display information; and displaying a second interface, where a first component in the second interface has a light and shadow effect formed after the lighting rendering.

In this way, with reference to the lighting information and the current display information, the electronic device provides an interface light and shadow effect that better meets a user requirement for the user, thereby improving user experience.

According to the first aspect, the global illumination definition indicates one or more of a physical lighting principle, a lighting type, a lighting property, a scene lighting effect, a lighting model, a lighting material, and a shadow property in a real world.

According to any one of the first aspect or the foregoing implementations of the first aspect, the current display information includes one or more of current time information, location information, motion state information, interface virtual light source information, component height information, component material information, and component transparency information of the electronic device.

According to any one of the first aspect or the foregoing implementations of the first aspect, a rendering process of the first component includes rendering of a border, rendering of a lighting layer, rendering of a user interface canvas, rendering of a surface layer, and rendering of a shadow hosting layer, where the rendering of the border is used to draw at least one of an emissive edge effect, a specular edge effect, and an outline effect of the first component; the lighting layer is used to receive lighting and complete lighting drawing corresponding to the first component; the user interface canvas is used to complete drawing of style content of the first component; the surface layer is used to draw a display container of the first component; and the shadow hosting layer is used to carry a layer shadow and overflow lighting drawing.

According to any one of the first aspect or the foregoing implementations of the first aspect, performing lighting rendering based on the lighting information and the current display information includes: outputting a visual feature based on light source information indicated by the lighting information and the current display information, a rendering equation, and a basic physical property, where the visual feature includes one or more of color information, projection information, and physical material information.

According to any one of the first aspect or the foregoing implementations of the first aspect, the light source information includes the lighting type and the lighting property; and the basic physical property includes one or more of a base color, metallic, roughness, reflectance, emissive, normal information, an index of refraction, transparency, absorption, and transmittance.

According to any one of the first aspect or the foregoing implementations of the first aspect, the light and shadow effect includes a shadow rendering effect, the shadow rendering effect corresponds to one or more of a height of the first component, a light source position, a shape of the first component, and a material of the first component, and the shape of the first component is a regular shape or an irregular shape.

For example, the shadow rendering effect is related to the height of the first component. A shadow of the first component includes an umbra and a penumbra. If the first component is higher and closer to a light source, the penumbra of the first component becomes larger and the shadow display effect becomes clearer.

For another example, the shadow rendering effect is related to the light source position. For example, if the light source is located at the upper right of the first component, the shadow is located at the lower left of the first component. For another example, if the light source is located directly above the first component, the shadow is located directly below the first component. If the light source is located at the upper left of the first component, the shadow is located at the lower right of the first component.

For another example, the shadow rendering effect is related to the shape of the first component. The electronic device may output shadow display effects in corresponding different shapes based on different shapes of the first component. In addition to supporting shadow rendering for circular and rounded rectangular shapes, the electronic device further supports shadow rendering for various irregular shapes.

For another example, the shadow rendering effect is related to the material of the first component. For example, if a translucent material supports projection of a color, a shadow color is similar to the color of the first component made of the translucent material. For example, the color of the first component to be rendered by the electronic device is blue, and the material of the first component is a translucent material. In this case, the electronic device may draw a light blue shadow based on the color and the material of the first component, so that a shadow display effect is more consistent with a shadow effect in a real physical world, thereby improving user experience.

In this way, the electronic device brings different shadow rendering effects based on different light sources and physical properties, enriches GUI interface display, and improves user experience.

In addition, when the shape of the first component is relatively complex, the electronic device may also generate a light and shadow effect of the first component in the complex shape with reference to the lighting information and the current display information, to enrich interface display.

According to any one of the first aspect or the foregoing implementations of the first aspect, performing lighting rendering based on the lighting information and the current display information includes: determining a shadow offset and a direction based on light source coordinates indicated by the lighting information and the current display information, and the height of the first component, and obtaining the shadow rendering effect; or copying the first component, and creating a shadow map; and obtaining the shadow rendering effect by performing blurring processing on the shadow map; or obtaining the shadow rendering effect based on the lighting information and the current display information by using a shadow rendering algorithm.

According to any one of the first aspect or the foregoing implementations of the first aspect, when the material of the first component is a translucent material, the light and shadow effect includes one or more of a frosted glass effect, a ribbed glass effect, and an acrylic glass effect.

In this way, when the first component is made of a translucent material, the electronic device may also generate, with reference to the lighting information and the current display information, the light and shadow effect of the first component made of the translucent material, to enrich interface display.

According to a second aspect, an electronic device is provided. The electronic device includes a processor, a memory, and a display. The memory and the display are coupled to the processor. The memory is configured to store computer program code. The computer program code includes computer instructions. When the processor reads the computer instructions from the memory, the electronic device is enabled to: detect a first operation of a user, and determine to refresh a first interface being displayed; obtain lighting information and current display information, where the lighting information is a preconfigured global illumination definition; perform lighting rendering based on the lighting information and the current display information; and display a second interface, where a first component in the second interface has a light and shadow effect formed after the lighting rendering.

According to the second aspect, the global illumination definition indicates one or more of a physical lighting principle, a lighting type, a lighting property, a scene lighting effect, a lighting model, a lighting material, and a shadow property in a real world.

According to any one of the second aspect or the foregoing implementations of the second aspect, the current display information includes one or more of current time information, location information, motion state information, interface virtual light source information, component height information, component material information, and component transparency information of the electronic device.

According to any one of the second aspect or the foregoing implementations of the second aspect, a rendering process of the first component includes rendering of a border, rendering of a lighting layer, rendering of a user interface canvas, rendering of a surface layer, and rendering of a shadow hosting layer, where the rendering of the border is used to draw at least one of an emissive edge effect, a specular edge effect, and an outline effect of the first component; the lighting layer is used to receive lighting and complete lighting drawing corresponding to the first component; the user interface canvas is used to complete drawing of style content of the first component; the surface layer is used to draw a display container of the first component; and the shadow hosting layer is used to carry a layer shadow and overflow lighting drawing.

According to any one of the second aspect or the foregoing implementations of the second aspect, performing lighting rendering based on the lighting information and the current display information includes: outputting a visual feature based on light source information indicated by the lighting information and the current display information, a rendering equation, and a basic physical property, where the visual feature includes one or more of color information, projection information, and physical material information.

According to any one of the second aspect or the foregoing implementations of the second aspect, the light source information includes the lighting type and the lighting property; and the basic physical property includes one or more of a base color, metallic, roughness, reflectance, emissive, normal information, an index of refraction, transparency, absorption, and transmittance.

According to any one of the second aspect or the foregoing implementations of the second aspect, the light and shadow effect includes a shadow rendering effect, the shadow rendering effect corresponds to one or more of a height of the first component, a light source position, a shape of the first component, and a material of the first component, and the shape of the first component is a regular shape or an irregular shape.

According to any one of the second aspect or the foregoing implementations of the second aspect, performing lighting rendering based on the lighting information and the current display information includes: determining a shadow offset and a direction based on light source coordinates indicated by the lighting information and the current display information, and the height of the first component, and obtaining the shadow rendering effect; or copying the first component, and creating a shadow map; and obtaining the shadow rendering effect by performing blurring processing on the shadow map; or obtaining the shadow rendering effect based on the lighting information and the current display information by using a shadow rendering algorithm.

According to any one of the second aspect or the foregoing implementations of the second aspect, when the material of the first component is a translucent material, the light and shadow effect includes one or more of a frosted glass effect, a ribbed glass effect, and an acrylic glass effect.

For technical effects corresponding to the second aspect and any implementation of the second aspect, refer to technical effects corresponding to the first aspect and any implementation of the first aspect. Details are not described herein again.

According to a third aspect, an electronic device is provided. The electronic device has a function for implementing the light and shadow effect display method according to the first aspect and any possible implementation of the first aspect. The function may be implemented by hardware, or may be implemented by hardware by executing corresponding software. The hardware or software includes one or more modules corresponding to the foregoing function.

According to a fourth aspect, a computer-readable storage medium is provided. The computer-readable storage medium stores a computer program (which may also be referred to as instructions or code). When the computer program is executed by an electronic device, the electronic device is enabled to perform the method according to the first aspect or any implementation of the first aspect.

According to a fifth aspect, a computer program product is provided. When the computer program product is run on an electronic device, the electronic device is enabled to perform the method according to the first aspect or any implementation of the first aspect.

According to a sixth aspect, a circuit system is provided. The circuit system includes a processing circuit, and the processing circuit is configured to perform the method according to the first aspect or any implementation of the first aspect.

According to a seventh aspect, a chip system is provided, including at least one processor and at least one interface circuit. The at least one interface circuit is configured to perform a transceiver function, and send instructions to the at least one processor. When the at least one processor executes the instructions, the at least one processor performs the method according to the first aspect or any implementation of the first aspect.

For technical effects of the foregoing aspects, refer to each other. Details are not described herein again.

### BRIEF DESCRIPTION OF DRAWINGS

FIG. 1 is a first diagram of a light and shadow display scenario according to an embodiment of this application;
FIG. 2 is a second diagram of a light and shadow display scenario according to an embodiment of this application;
FIG. 3 is a third diagram of a light and shadow display scenario according to an embodiment of this application;
FIG. 4 is a diagram illustrating forms of electronic devices according to an embodiment of this application;
FIG. 5 is a diagram of a hardware structure of an electronic device according to an embodiment of this application;
FIG. 6 is a first block diagram of a software structure according to an embodiment of this application;
FIG. 7 is a second block diagram of a software structure according to an embodiment of this application;
FIG. 8 is a first diagram of a rendering process according to an embodiment of this application;
FIG. 9 is a second diagram of a rendering process according to an embodiment of this application;
FIG. 10 is a diagram of a light and shadow effect display processing process according to an embodiment of this application;
FIG. 11 is a first diagram of light and shadow effect display according to an embodiment of this application;
FIG. 12 is a second diagram of light and shadow effect display according to an embodiment of this application;
FIG. 13 is a third diagram of light and shadow effect display according to an embodiment of this application;
FIG. 14 is a diagram of a basic physical principle for generating a light and shadow effect according to an embodiment of this application;
FIG. 15 is a diagram illustrating light and shadow effects of different types of light sources according to an embodiment of this application;
FIG. 16 is a diagram of a UI framework structure according to an embodiment of this application;
FIG. 17 is a diagram of display of metallic, normal, and roughness according to an embodiment of this application;
FIG. 18 is a diagram of a scenario for automatically generating normal information according to an embodiment of this application;
FIG. 19 is a diagram of an index of refraction variation scenario according to an embodiment of this application;
FIG. 20 is a diagram of an absorption variation scenario according to an embodiment of this application;
FIG. 21 is a diagram of a transmittance variation scenario according to an embodiment of this application;
FIG. 22 is a diagram of a thickness variation scenario according to an embodiment of this application;
FIG. 23 is a diagram of a principle of a PBR lighting model according to an embodiment of this application;
FIG. 24 is a diagram of a principle of a ray-tracing rendering model according to an embodiment of this application;
FIG. 25 is a diagram of a principle of a translucent material rendering equation according to an embodiment of this application;
FIG. 26 is a first diagram illustrating a shadow effect according to an embodiment of this application;
FIG. 27 is a second diagram illustrating a shadow effect according to an embodiment of this application;
FIG. 28 is a third diagram illustrating a shadow effect according to an embodiment of this application;
FIG. 29 is a fourth diagram illustrating a shadow effect according to an embodiment of this application;
FIG. 30 is a fifth diagram illustrating a shadow effect according to an embodiment of this application;
FIG. 31 is a first diagram of a shadow simulation principle according to an embodiment of this application;
FIG. 32 is a second diagram of a shadow simulation principle according to an embodiment of this application;
FIG. 33 is a first diagram of a shadow effect generation principle according to an embodiment of this application;
FIG. 34 is a second diagram of a shadow effect generation principle according to an embodiment of this application;
FIG. 35 is a third diagram of a shadow effect generation principle according to an embodiment of this application;
FIG. 36 is a first diagram of a principle of ribbed glass according to an embodiment of this application;
FIG. 37 is a second diagram of a principle of ribbed glass according to an embodiment of this application;
FIG. 38 is a diagram illustrating a frosted glass effect, a ribbed glass effect, and a lattice glass effect according to an embodiment of this application;
FIG. 39 is a diagram illustrating window display effects of different translucent materials according to an embodiment of this application;
FIG. 40 is a first diagram illustrating a light and shadow display effect of a home screen according to an embodiment of this application;
FIG. 41 is a second diagram illustrating a light and shadow display effect of a home screen according to an embodiment of this application;
FIG. 42(a) to FIG. 42(d) are diagrams illustrating a light and shadow display effect in a mail refreshing process according to an embodiment of this application;
FIG. 43(a) and FIG. 43(b) are diagrams illustrating a light and shadow display effect in a pull-up menu activation process according to an embodiment of this application;
FIG. 44 is a schematic flowchart of a light and shadow effect display method according to an embodiment of this application; and
FIG. 45 is a diagram of a structure of an electronic device according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely for the purpose of describing specific embodiments, and are not intended to limit this application. As used in the specification of this application and the appended claims, terms "one", "a", "the", "the foregoing", "this", and "the one" in singular forms are intended to include expressions such as "one or more", unless otherwise explicitly specified in the context. It should be further understood that, in the following embodiments of this application, "at least one" and "one or more" mean one or more (including two).

Reference to "an embodiment" or "some embodiments" or the like described in this specification means that one or more embodiments of this application include a specific feature, structure, or characteristic described with reference to the embodiment. Therefore, expressions such as "in an embodiment", "in some embodiments", "in some other embodiments", and "in some different embodiments" that appear at different places in this specification do not necessarily refer to a same embodiment, but mean "one or more but not all embodiments", unless otherwise specifically emphasized in another manner. The terms "comprise", "include", and "have", and variants thereof all mean "include but are not limited to", unless otherwise specifically emphasized in another manner. The term "connection" includes direct connection and indirect connection, unless otherwise specified. The terms "first" and "second" are intended merely for the purpose of description, and shall not be understood as an indication or implication of relative importance or an implicit indication of a quantity of indicated technical features.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

In some embodiments, in an electronic device, some presentation means are introduced from a real physical world, to achieve a light and shadow effect of a human-machine interaction interface (graphical user interface, GUI) of the electronic device. For example, a control shadow is displayed based on a preset virtual light source and a Z-axis altitude of the control. In this way, the display effect is enriched, and user experience is improved.

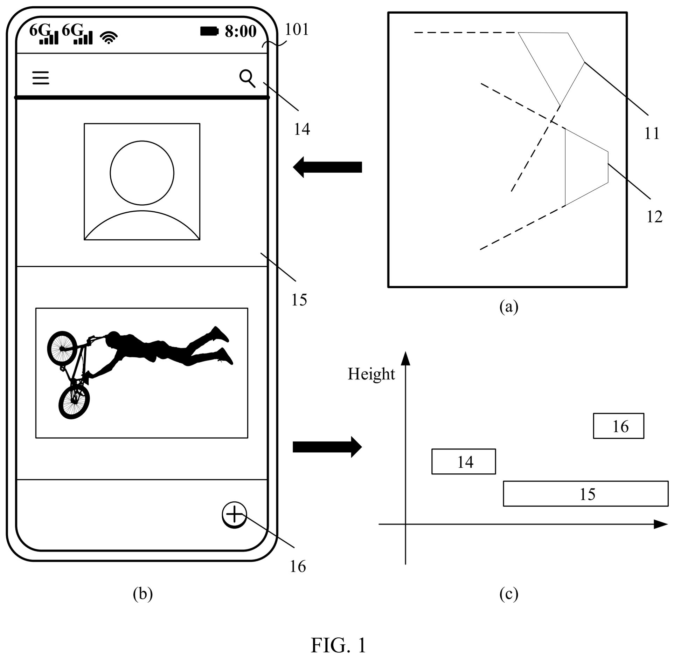

For example, as shown in (a) in FIG. 1, two virtual light sources such as a virtual light source 11 and a virtual light source 12 are defined in Android^{®}. As shown in (b) in FIG. 1, a search bar 14, a background 15, and an adding control 16 are displayed on an interface 101. As shown in (c) in FIG. 1, Z-axis altitudes of different controls displayed on a same interface may be different. In this case, to achieve a light and shadow display effect of the interface 101, the electronic device may draw a shadow with reference to lighting directions of the virtual light source 11 and the virtual light source 12 and Z-axis altitudes of different controls. For example, a shadow of the control 16 is added to the interface 101, to improve the light and shadow display effect of the interface 101.

However, currently, the light and shadow display effect is limited to only some controls of simple shapes. For example, only a circular control and a rounded rectangular control support shadow display, and a better light and shadow effect of the GUI cannot be achieved.

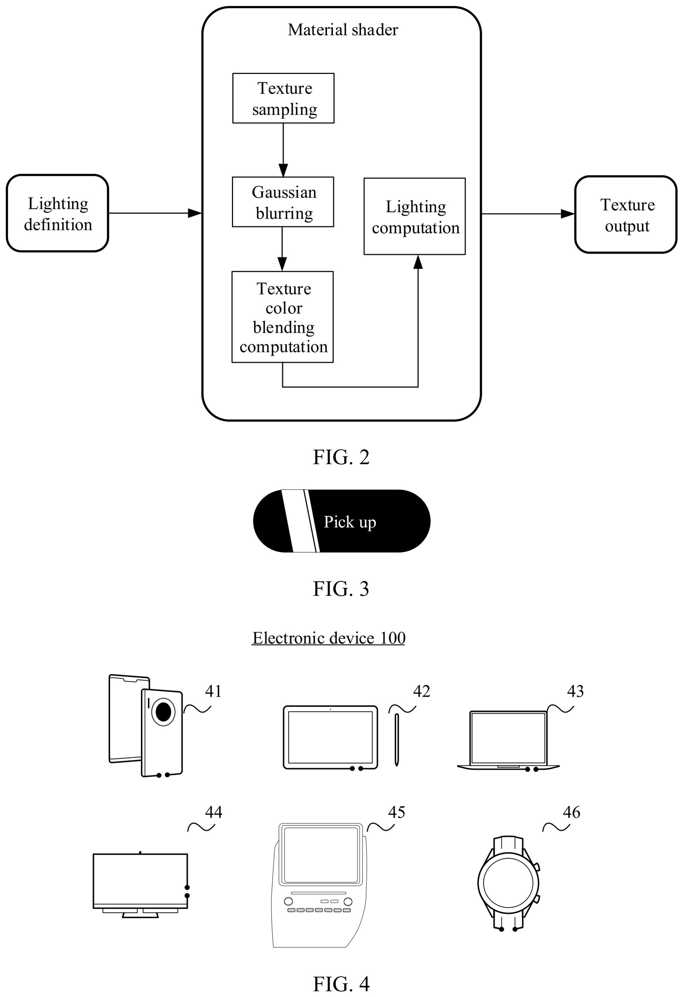

In some other embodiments, realistic physical lighting definitions are widely used in the Microsoft^{®} Universal Windows Platform (universal windows platform, UWP), so that light and shadow effects are generated for controls displayed on a GUI interface. The lighting definitions include lighting type definitions shown in Table 1, lighting property definitions shown in Table 2, scene lighting effect definitions shown in Table 3, and lighting model (rendering equation) definitions shown in Table 4. As shown in FIG. 2, in an interface display process, the electronic device performs lighting rendering by using a material shader with reference to the light definitions. A lighting rendering process includes texture sampling, Gaussian blurring, texture color blending computation, and lighting computation, to implement a texture output. In the lighting rendering process, the material shader implements lighting rendering by using parameters such as a background texture (texture), a Gaussian blur (Blur) parameter definition, exclusion blending (texture/color), an overlay color, and a noise function with reference to the lighting definitions.

**Table 1**

| Light source | Description |
|---|---|
| AmbientLight | Diffuse lighting |
| DistantLight | Parallel light (Sun) |
| PointLight | Point light source |
| SpotLight | Spotlight |

**Table 2**

| Property | Description |
|---|---|
| Color | Color |
| Direction | Direction |
| CoordinateSpace | Coordinate system (which View) |
| Cone | Cone (spot) |
| Offset | Offset |
| Intensity | Intensity |
| Attenuation | Attenuation coefficient |

**Table 3**

| Property | Description |
|---|---|
| Normal Map | Normal map |
| Ambient | Ambient light |
| Specular | Specular |
| Diffuse | Diffuse |
| Reflectance Model | Reflectance model |

**Table 4**

| Property | Description |
|---|---|
| Blinn Phong | Phong model |
| Physically Based Blinn Phong | PBR |

It can be learned that although the UWP achieves a realistic lighting effect for the GUI interface with reference to the lighting definitions, in the lighting rendering process, lighting rendering is completed by using a layer blending approach with reference to processing parameters of different layers (background texture (texture) and Gaussian blur (Blur) parameter definitions, or the like). Currently, Microsoft^{®} mainly uses acrylic materials to represent windows and various translucent effects in the UWP. However, the layer blending approach leads to poor effects of the acrylic materials.

In some 3D scenes, the electronic device may also complete object rendering through real-time 3D rendering. A real-time 3D rendering process includes, for example, analysis of a 3D scene and rendering object data, 3D content modeling, preparation of UV maps, baking maps for a 3D model, preparation of materials, real-time rendering, and animation processing.

Real-time 3D rendering provides high realism, facilitates user understanding, and can be widely used in fields such as games. However, due to complexity of the real-time 3D rendering process, a high requirement is imposed on a computing capability of the electronic device, and high power consumption is generated. Therefore, real-time 3D rendering cannot be widely applied to various electronic devices. In addition, the real-time 3D rendering process is different from a conventional 2D human-machine interface development process, and interconnection cannot be directly implemented.

In some other embodiments, in some GUI systems, some simulated lighting effects are further achieved by overlaying light maps or performing simulation by using 2D rendering and drawing algorithms. For example, a control glowing effect is shown in FIG. 3. Another example is a text flashing effect.

However, in the current method, separate development is required for different lighting effects, and development costs are relatively high. In addition, the lighting effect is not realistic, and cannot reflect a true lighting effect.

Based on this, embodiments of this application provide a light and shadow effect display method. An electronic device adaptively displays a light and shadow effect based on preset lighting information and current display information. In this way, a GUI light and shadow effect is enriched, and user experience is improved.

Optionally, the light and shadow effect display method provided in embodiments of this application may be applied to an electronic device 100. As shown in FIG. 4, the electronic device 100 may be specifically a terminal device that has a display function, such as a mobile phone 41, a tablet computer 42, a notebook computer 43, a smart screen 44, an in-vehicle terminal 45, a wearable device (such as a smartwatch or a smart band) 46, a foldable mobile phone, a computer, a personal computer (personal computer, PC), an ultra-mobile personal computer (ultra-mobile personal computer, UMPC), a netbook, a personal digital assistant (personal digital assistant, PDA), a virtual reality (virtual reality, VR) device or an augmented reality (augmented reality, AR) device, or an artificial intelligence (artificial intelligence, AI) device. An operating system installed in the electronic device 100 includes but is not limited to iOS^{®}, Android^{®}, HarmonyOS^{®}, Windows^{®}, Linux^{®}, or another operating system. A specific type of the electronic device 100 and the installed operating system are not limited in this application.

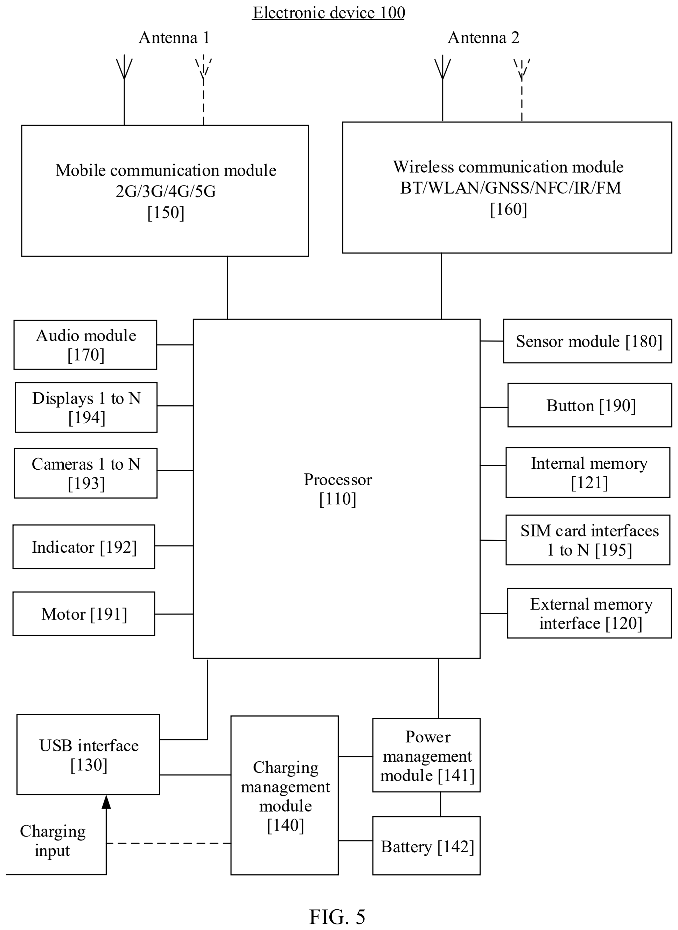

FIG. 5 is a diagram of a structure of the electronic device 100.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identity module (subscriber identity module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control over instruction fetching and instruction execution.

A memory may be further disposed in the processor 110, and is configured to store instructions and data. In some embodiments, the memory in the processor 110 is a cache memory. The memory may store instructions or data used only a short time ago or used cyclically by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The USB interface 130 is an interface complying with a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect a headset for playing audio through the headset. Alternatively, the interface may be configured to connect to another electronic device, for example, an AR device.

It may be understood that an interface connection relationship between modules that is illustrated in this embodiment of this application is merely an example for description, and does not constitute a limitation on the structure of the electronic device 100. In some other embodiments of this application, the electronic device 100 may alternatively use an interface connection mode different from that in the foregoing embodiment, or use a combination of a plurality of interface connection modes.

The charging management module 140 is configured to receive a charging input from the charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further reused to improve antenna utilization. For example, the antenna 1 may be reused as a diversity antenna in a wireless local area network. In some other embodiments, the antenna may be used in combination with a tuning switch.

The mobile communication module 150 may provide a wireless communication solution including 2G/3G/4G/5G or the like and applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the processed electromagnetic wave to the modem processor for demodulation. The mobile communication module 150 may further amplify a signal modulated by the modem processor, and convert the amplified signal into an electromagnetic wave for radiation through the antenna 1. In some embodiments, at least some functional modules in the mobile communication module 150 may be disposed in the processor 110. In some embodiments, at least some functional modules in the mobile communication module 150 and at least some modules in the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor and then transmitted to the application processor. The application processor outputs a sound signal through an audio device, or displays an image or a video via the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution including a wireless local area network (wireless local area network, WLAN) (for example, a Wireless Fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like and applied to the electronic device 100. The wireless communication module 160 may be one or more components integrating at least one communication processing module. The wireless communication module 160 receives an electromagnetic wave through the antenna 2, performs frequency modulation and filtering processing on an electromagnetic wave signal, and sends the processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 of the electronic device 100 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, the GNSS, the WLAN, NFC, FM, the IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, and the GPUs execute program instructions to generate or change display information.

The display 194 is configured to display an image, a video, and the like. The display 194 includes a display panel. The display panel may be made of a liquid crystal display (liquid crystal display, LCD), for example, an organic light-emitting diode (organic light-emitting diode, OLED), an active-matrix organic light emitting diode or an active matrix organic light emitting diode (active-matrix organic light emitting diode, AMOLED), a flexible light-emitting diode (flexible light-emitting diode, FLED), a mini-LED, a micro-LED, a micro-OLED, or a quantum dot light-emitting diode (quantum dot light-emitting diode, QLED). In some embodiments, the electronic device 100 may include one or N displays 194, where N is a positive integer greater than 1.

The camera 193 is configured to capture a still image or a video. An optical image of an object is generated through a lens and projected to a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The interface 120 for external memory may be configured to connect an external storage card, for example, a micro SD card, to extend a storage capability of the electronic device 100. The external storage card communicates with the processor 110 through the interface 120 for external memory, to implement a data storage function. For example, files such as music and videos are stored in the external memory card.

The internal memory 121 may be configured to store computer-executable program code, where the computer-executable program code includes instructions. The internal memory 121 may include a program storage area and a data storage area. The program storage area may store an operating system, an application required by at least one function (for example, a voice playing function and an image playing function), and the like. The data storage area may store data (for example, audio data and a phone book) and the like created during use of the electronic device 100. In addition, the internal memory 121 may include a high-speed random access memory, and may further include a nonvolatile memory, for example, at least one magnetic disk storage device, a flash memory, or a universal flash storage (universal flash storage, UFS). The processor 110 performs various functional applications and data processing of the electronic device 100 by executing instructions stored in the internal memory 121 and/or instructions stored in the memory disposed in the processor.

The audio module 170 is configured to convert digital audio information into an analog audio signal for outputting, and is also configured to convert an analog audio input into a digital audio signal. The audio module 170 may be further configured to encode and decode audio signals. In some embodiments, the audio module 170 may be disposed in the processor 110, or some functional modules in the audio module 170 are disposed in the processor 110. The electronic device 100 may perform music playing, recording, or the like through the audio module 170. The audio module 170 may include a speaker, a receiver, a microphone, a headset jack, an application processor, and the like, to implement an audio function.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 190 includes a power button, a volume button, and the like. The button 190 may be a mechanical button, or may be a touch-sensitive button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. The motor 191 may also have different vibration feedback effects corresponding to touch operations performed on different areas of the display 194. Different application scenarios (for example, a time reminder, information receiving, an alarm clock, and a game) may also correspond to different vibration feedback effects.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1.

A software system of the electronic device 100 may use a layered architecture, an event-driven architecture, a microkernel architecture, a micro service architecture, or a cloud architecture. In an embodiment of this application, an Android system with a layered architecture is used as an example to describe the software structure of the electronic device 100.

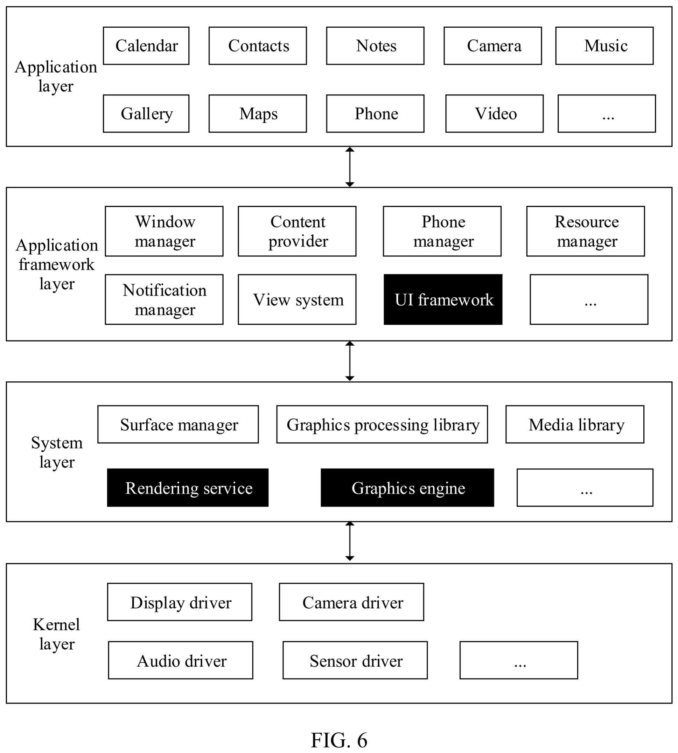

FIG. 6 is a block diagram of the software structure of the electronic device 100 according to an embodiment of this application.

In a layered architecture, software is divided into several layers, and each layer has a clear role and task. The layers communicate with each other through a software interface. In some embodiments, an Android system is divided into four layers: an application layer, an application framework layer, a system layer, and a kernel layer from top to bottom.

The application layer may include a series of application packages.

As shown in FIG. 6, the application packages may include applications such as calendar, contacts, notes, camera, music, gallery, maps, phone, and video.

The application framework layer provides an application programming interface (application programming interface, API) and a programming framework for the applications at the application layer. The application framework layer includes some predefined functions.

As shown in FIG. 6, the application framework layer may include a user interface (user interface, UI) framework, a window manager, a content provider, a view system, a phone manager, a resource manager, a notification manager, and the like.

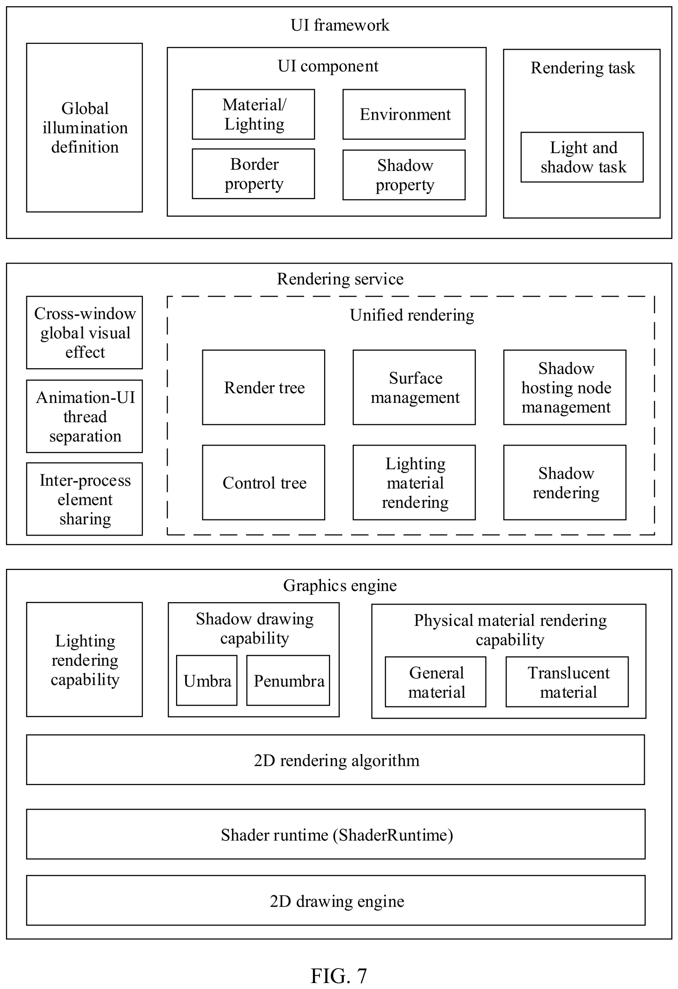

For example, as shown in FIG. 7, the UI framework is configured to store a global illumination definition, construct a layered architecture of a UI component, and create a rendering task.

Optionally, the UI framework includes a global illumination definition. The global illumination definition indicates content such as various physical lighting principles, lighting types, lighting properties, scene lighting effects, lighting models, lighting materials, and shadow properties in a real world. Based on global lighting information defined by the UI framework, a shadow effect in a subsequent rendering process is enriched.

Optionally, the UI framework reconstructs a current basic UI component, and adds related information such as a material, lighting, an environment, a border property, and a shadow property, to complete lighting material rendering in a single-layer canvas.

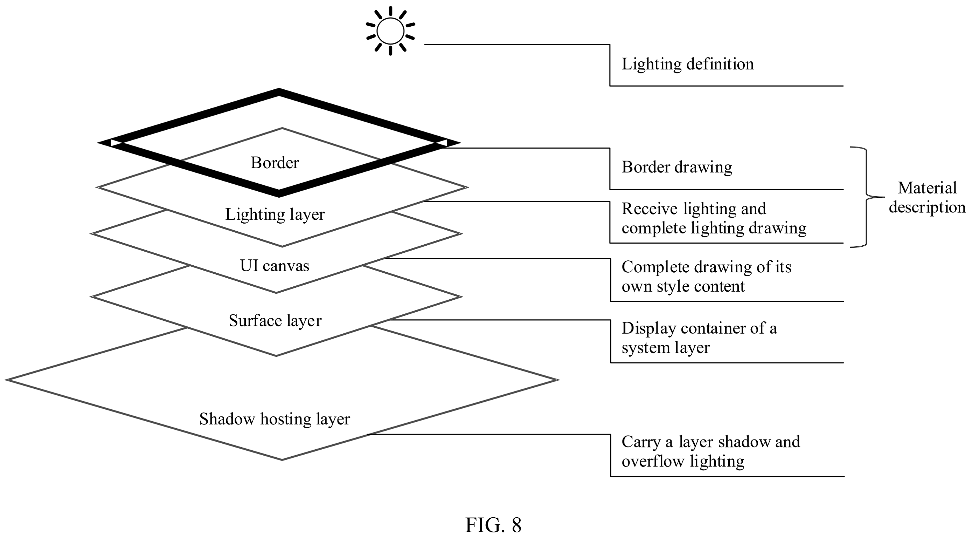

For example, as shown in FIG. 8, a UI component is reconstructed in a single-layer canvas. The UI framework divides a rendering process of the UI component into five layers, including border drawing, a lighting layer, a UI canvas, a surface (surface) layer, and a shadow hosting layer. In the rendering process, a lighting definition may indicate information such as a lighting type, a lighting spatial position, a lighting attenuation coefficient, and a lighting color. The border drawing is used to draw effects of the UI component such as an emissive edge effect, a specular edge effect, and an outline effect. The lighting layer is used to receive lighting and complete lighting drawing. The UI canvas is used to complete drawing of style content of the UI component. The surface is used to draw a display container of the system layer. The shadow hosting layer is used to carry a layer shadow and overflow lighting drawing, so that a system-level shadow and lighting do not occupy layout space.

Optionally, the UI framework is further configured to create a rendering task, including a lighting rendering task. In addition, the UI framework delivers a created light and shadow task to a rendering service at the system layer, to trigger rendering.

The window manager is configured to manage a window program. The window manager may obtain a size of the display, determine whether there is a status bar, perform screen locking, take a screenshot, and the like.

The content provider is configured to store and obtain data, and make the data accessible to an application. The data may include a video, an image, audio, calls made and answered, a browse history and bookmarks, a phone book, and the like.

The view system includes visual controls such as a control for displaying a text and a control for displaying a picture. The view system may be configured to construct an application. A display interface may include one or more views. For example, a display interface including an SMS message notification icon may include a text display view and a picture display view.

The phone manager is configured to provide a communication function of the electronic device 100, for example, call status management (including answering or ending a call, or the like).

The resource manager provides various resources such as a localized character string, an icon, a picture, a layout file, and a video file for an application.

The notification manager enables an application to display notification information in the status bar, and may be configured to convey a notification message. The notification manager may automatically disappear after a short stay without requiring user interaction. For example, the notification manager is configured to notify download completion, give a message notification, and the like. The notification manager may alternatively present a notification in a top status bar of the system in a form of a graph or a scrolling text, for example, a notification of an application running in the background, or may be a notification that appears on the screen in a form of a dialog box. For example, text information is displayed in the status bar, an alert tone is played, the electronic device vibrates, or the indicator blinks.

The system layer may include a plurality of functional modules, for example, a surface manager (surface manager), a graphics processing library (for example, OpenGL ES), a rendering service, a graphics engine (for example, SGL), and a media library (Media Library).

The surface manager is configured to manage a display subsystem and provide fusion of 2D and 3D layers for a plurality of applications.

The media library supports playback and recording in a plurality of commonly used audio and video formats, still image files, and the like. The media library may support a plurality of audio and video encoding formats, such as MPEG4, H.264, MP3, AAC, AMR, JPG, and PNG.

The graphics processing library is configured to implement graphics drawing, image rendering, composition, layer processing, and the like. In some examples, the graphics processing library includes a rendering service.

The graphics engine is a drawing engine for drawing.

The kernel layer is a layer between hardware and software. The kernel layer includes at least a display driver, a camera driver, an audio driver, and a sensor driver.

For example, as shown in FIG. 7, the rendering service is used to perform a unified rendering process, a cross-window global visual effect, animation-UI thread separation, and interprocess element sharing. Unified rendering includes a render tree, surface management, shadow hosting node management, a control tree, lighting material rendering, shadow rendering, and the like.

The graphics engine is used to support the rendering service to implement a lighting rendering capability, a shadow drawing capability, and a physical material rendering capability. The graphics engine includes, for example, a 2D rendering algorithm, a shader runtime (ShaderRuntime), and a 2D drawing engine. Optionally, the shadow drawing includes umbra (or umbra) drawing and penumbra drawing. The physical material includes a general material and a translucent material, and the general material is, for example, a physically based rendering (physically based rendering, PBR) material.

In some embodiments, when determining that display of a current interface needs to be refreshed (for example, a touch event is detected), the electronic device draws one or more layers by using a UI thread (for example, Do Frame) in the UI framework; and a render (Render) thread (for example, Draw Frame) renders the one or more layers. Then a composition thread (Surface Flinger) in the display framework performs layer composition on the one or more drawn layers (that is, the one or more rendered layers) to obtain an image frame. Then an LCD driver of a hardware display module may receive the composed image frame, and the LCD displays the composed image frame. After the LCD displays the image frame, the image displayed by the LCD can be perceived by human eyes.

Optionally, an event that triggers rendering is, for example, a user touch operation detected by the electronic device on the display, for example, an operation of tapping an interactive control, or a swipe operation (for example, swipe up and down, or swipe left and right) of the user on the display; or may be a user voice input detected by the electronic device; or may be an event of automatic screen switching of a foreground application of the electronic device. This is not limited herein. The foreground application is an application corresponding to an interface currently displayed on the display of the electronic device.

It should be noted that the screen content of the foreground application may not only include the screen viewed by the user, but also include content without a user interface, content at a transparent layer, or content that is blocked by another application interface and invisible to the user. The electronic device needs to obtain all to-be-drawn control data and layout data that correspond to the screen content.

Optionally, the rendering process includes control rendering (including layout rendering) and lighting rendering. A lighting rendering process is described in this embodiment of this application. For a control rendering process, refer to the conventional technology. Details are not described in this embodiment of this application.

In some embodiments, in a UI drawing process, the UI thread can draw a control tree (view tree), where the control tree is used to represent controls and a layout that are organized based on a tree structure. Based on the tree structure of the control tree, different rendering nodes can be determined in a rendering process.

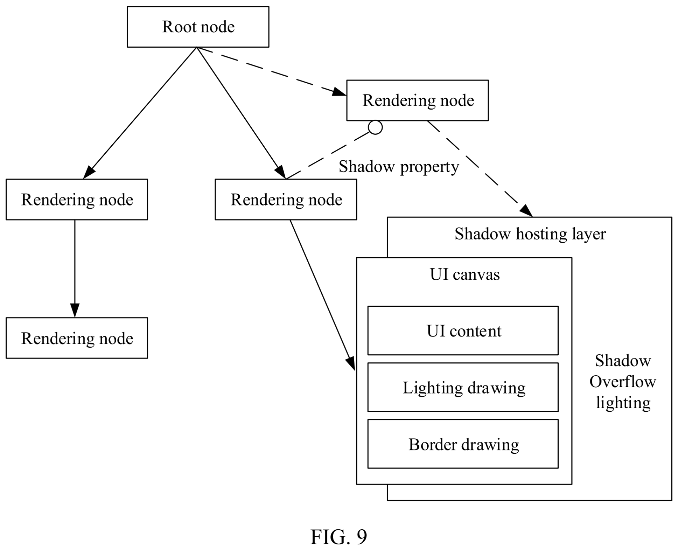

For example, as shown in FIG. 9, with reference to the control tree structure and the layered rendering structure shown in FIG. 8, the rendering service can reconstruct a rendering process, and complete drawing of a UI component and a lighting border in a unified canvas. The rendering service constructs a shadow hosting layer based on information such as a Z-axis height and a shadow property of the UI component, so that a shadow and overflow lighting rendering do not occupy layout space. For example, as shown in FIG. 9, the rendering service completes UI content drawing, lighting drawing, and border drawing on the UI canvas. In addition, an overflow shadow corresponding to the UI component can be displayed at the shadow hosting layer, so that the shadow and overflow lighting rendering do not occupy layout space.

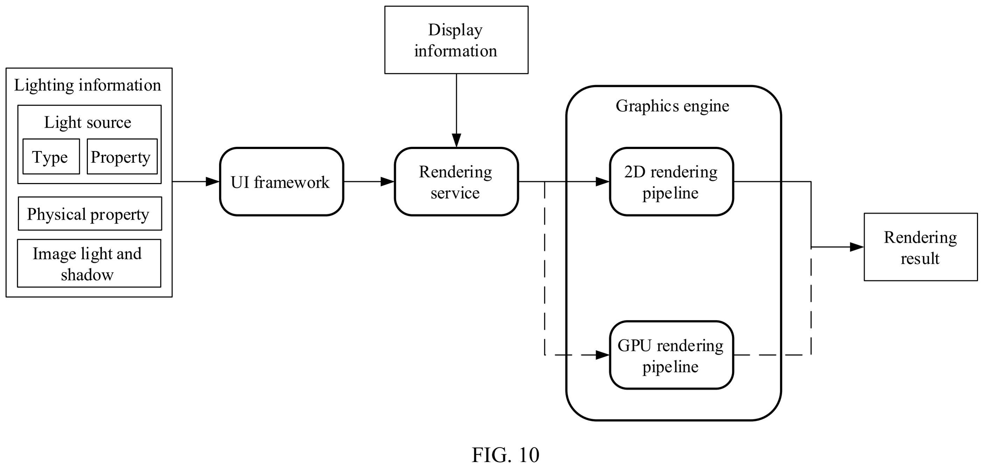

For example, in a lighting rendering system shown in FIG. 10, an overall lighting rendering process is described with reference to interaction processes of different modules. When a user performs an input operation (for example, an operation of triggering an electronic device to start an application) on the electronic device, a kernel layer may generate a corresponding input event (for example, an application start event) based on the input operation, and report the event to an application framework layer. A UI framework at the application framework layer determines control data and layout data that correspond to the application, determines rendering process logic (for example, creating a rendering task) of a rendering service, and sends the rendering process logic to the rendering service at a system layer. The rendering service may process obtained information by using a graphics engine, and send a processed rendering result to a display driver of the kernel layer, and the display driver displays a corresponding application interface on a display.

Lighting information is preset in the UI framework, and the lighting information is a global illumination definition. As described above, the lighting information includes light source information (such as a light source type and a light source property), a physical property, image light and shadow, and the like. After determining the rendering process logic of the rendering service, the UI framework sends the light source information and the rendering task to the rendering service. In addition, the rendering service may further obtain display information required in a current rendering process, such as time information, location information, motion state information (such as hand posture information of the electronic device), interface virtual light source information, control height information, and control transparency. Then the rendering service may perform the rendering task by using the graphics engine with reference to the lighting information and the display information, to output a lighting rendering result.

Optionally, the graphics engine includes a 2D rendering pipeline, and the rendering service completes lighting rendering by using the 2D rendering pipeline. In some examples, the rendering service may further complete lighting rendering by using a GPU rendering pipeline, to obtain a better rendering effect.

In this way, a lighting rendering system is added to an existing 2D GUI interface, and interaction and reality augmentation of the existing GUI interface are implemented by defining and simulating realistic physical lighting and a lighting system.

In addition, subconscious familiarity of humans with a lighting system can avoid increasing learning costs and improve user acceptance. In addition, an effect of the lighting system aligns with human perception, and is easily accepted by the user when improving exquisiteness and aesthetics of the GUI interface.

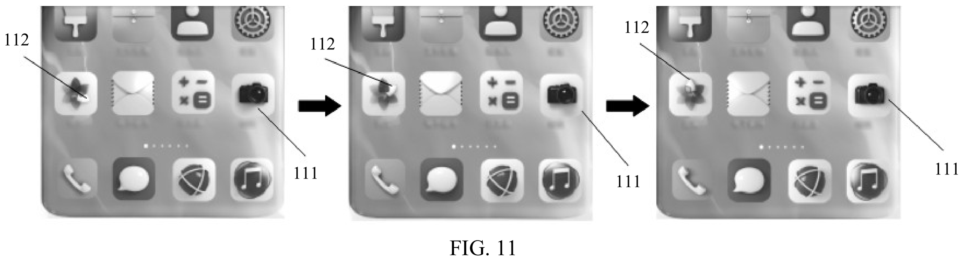

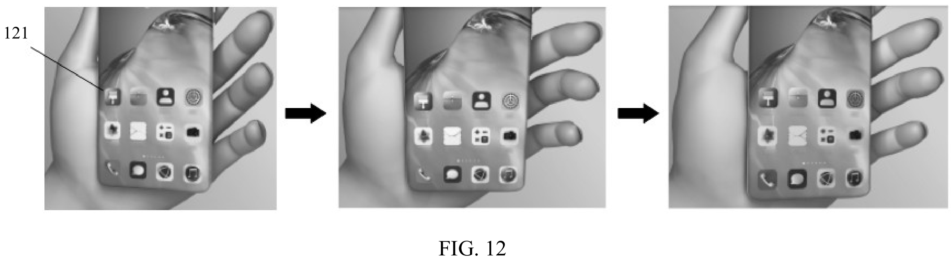

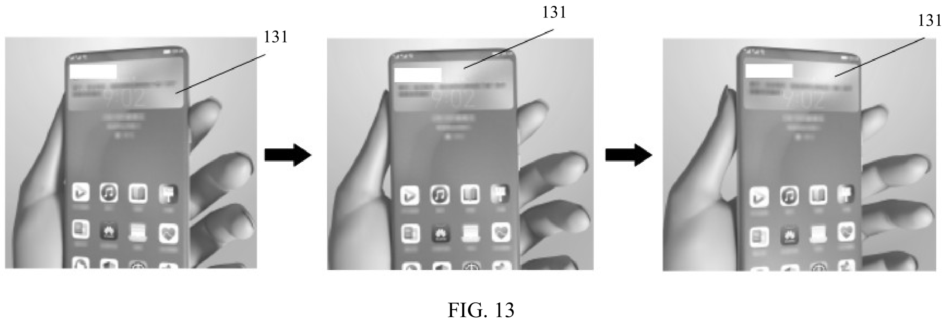

For example, based on the lighting rendering system shown in FIG. 10, the electronic device may obtain a more realistic light and shadow effect on the GUI interface. For example, as shown in FIG. 11, in a process in which the electronic device displays a home screen, shadow effects on an icon 111 and an icon 112 displayed on the home screen may rotate counterclockwise with time. For another example, as shown in FIG. 12, in the process in which the electronic device displays the home screen, a light and shadow effect of an icon displayed on the home screen may change with a posture of the handheld electronic device. For example, a size of a light and shadow area on the icon 121 changes with a direction and an angle in which the user shakes the electronic device. For another example, as shown in FIG. 13, the electronic device receives a pop-up notification, and as the posture of the handheld electronic device changes, a light and shadow position on a pop-up notification 131 changes.

Optionally, the electronic device may determine the posture of the electronic device by using a sensor installed in the electronic device. For example, a gyroscope sensor is installed in the electronic device, and the gyroscope sensor is configured to determine a motion posture of the electronic device. In some embodiments, angular velocities of the electronic device around three axes (that is, an x-axis, a y-axis, and a z-axis) may be determined by using the gyroscope sensor. For another example, an acceleration sensor is installed in the electronic device, and the acceleration sensor may detect a magnitude of acceleration of the electronic device in each direction (generally three axes). When the electronic device is stationary, a magnitude and a direction of gravity may be detected. Alternatively, the acceleration sensor may be further configured to identify a posture of the electronic device, and applied to landscape/portrait orientation switching.

In this way, with reference to the lighting information and the display information, the electronic device provides a GUI light and shadow effect that better meets a user requirement for the user, thereby improving user experience.

The foregoing briefly describes an overall solution of the light and shadow effect display method provided in embodiments of this application. The following describes in detail a specific implementation process of the solution.

In some embodiments, all main visual features of a physical world in a computer vision representation system are determined by lighting, basic physical properties, and a lighting rendering equation. The main visual features include color information, projection information, and physical material information.

In long-term subconscious of humans, impact of lighting on physical visual effects has been deeply ingrained. Therefore, a lighting rendering system is introduced into a GUI system, and the lighting rendering system brings features such as a color, brightness, a shadow, and a material to a GUI, so that user experience can be significantly improved.

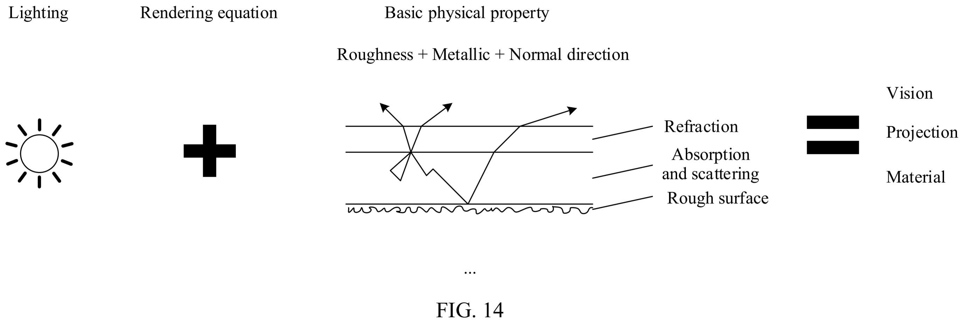

For example, as shown in FIG. 14, based on lighting, a rendering equation (PBR), and basic physical properties, an electronic device may output visual features such as vision (such as color information), projection information, and physical material information on a GUI interface.

For example, based on a light and shadow formation principle and a material formation principle in the physical world, and with reference to characteristics of a 2D GUI system, the electronic device constructs a lighting rendering system available in the 2D GUI system, thereby imparting a lighting visual effect, a realistic physical shadow effect, and a material effect to a graphical control, an icon, a card, a picture, and the like on a 2D GUI. Therefore, acceptance and understanding of a human-machine interaction interface by a user are improved, and user experience is ultimately improved.

In some embodiments, a system-level light and shadow capability of the electronic device is implemented by using physical realistic lighting (for example, corresponding to lighting information), physical properties of a UI system, and image light and shadow. For example, as shown in FIG. 10, the lighting information includes light source information, a physical property, and image light and shadow.

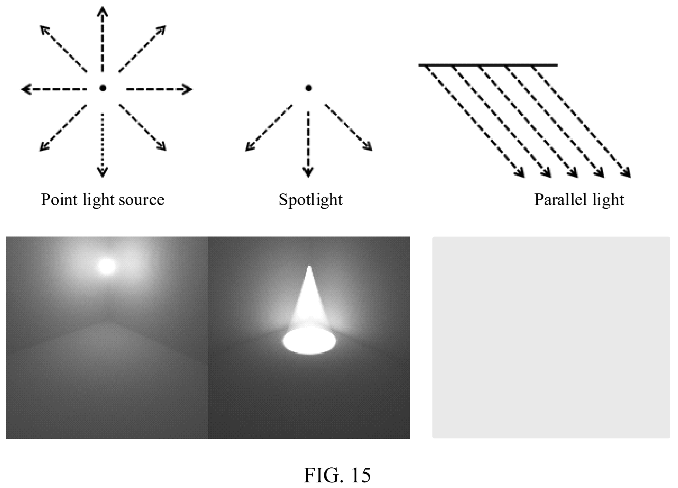

The light source information includes a light source type and a light source property. As shown in Table 5, the light source type includes a diffuse light source, a parallel light (Sun) source, a point light source, a spotlight source, a natural ambient light source, a skylight source, or the like. For example, FIG. 15 shows display effects of the point light source, the spotlight source, and the parallel light source.

As shown in Table 6, the light source property includes a color, a direction, a position in a coordinate system (which View), a cone (spot), an offset, intensity, an attenuation coefficient, or the like of the light source. For example, the position of the light source in the coordinate system changes with time (for example, sunrise in the east and sunset in the west). Optionally, scenarios in which the light source property changes include, for example, a scenario in which the light source property changes with time, a scenario in which the light source property changes with weather (for example, rain, thunder, or fog), a scenario in which the light source property changes with a system body, and a scenario in which the light source property changes with a product form.

Different lighting effects may be generated for a UI component based on different light source types and light source properties, so that the electronic device can achieve corresponding light and shadow display effects based on the lighting effects.

**Table 5**

| Light source | Description |
|---|---|
| AmbientLight | Diffuse |
| DistantLight | Parallel light (Sun) |
| PointLight | Point light source |
| SpotLight | Spotlight |
| HDR ambient light | Natural ambient light, skylight, or the like |

**Table 6**

| Property | Description |
|---|---|
| Color | Color |
| Direction | Direction |
| Coordinate Space | Coordinate system (which View) |
| Cone | Cone (spot) |
| Offset | Offset |
| Intensity | Intensity |
| Attenuation | Attenuation coefficient |

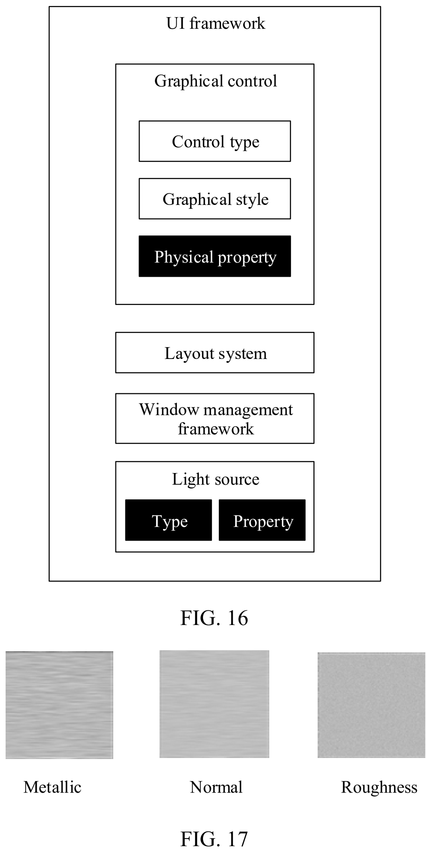

In some embodiments, as described above, the electronic device adds a global illumination definition (that is, light source information) to a UI framework. For example, as shown in FIG. 16, a graphical control, a layout system, a window management framework, and a light source are included in a position of the global illumination definition in the UI framework. Defined light source content includes the light source type and the light source property described above. Defined graphical control content includes a control type, a graphical style, and a physical property.

Optionally, the system-level light and shadow capability of the electronic device is implemented by using physical realistic lighting (for example, corresponding to the lighting information), the physical properties of the UI system, and the image light and shadow. The physical properties of the UI system include a UI element property, a window property, and a normal property and a physical property (such as metallic, roughness, reflectance, transparency, or a base color) of a UI.

For example, basic physical property definitions are shown in Table 7. These basic physical property definitions are preconfigured in the UI framework. In this case, in a subsequent rendering process, the rendering system can better complete lighting rendering based on these basic physical property definitions.

It should be understood that, in different operating systems, names and descriptions in the basic physical property definitions may be different, but physical essence of content conveyed by these different descriptions is the same. For example, physical essence of a "specular reflection/glossiness" process that may be used in some systems is consistent with physical essence of a "metallic/roughness" process provided in this embodiment of this application, but different descriptions are used.

**Table 7**

| Parameter | Definition |
|---|---|
| BaseColor base color (diffuse reflection) | Diffuse reflection on a non-metal surface, specular reflection on a metal surface, and background color in a UI scene. |
| Metallic metallic | Binary value (0 or 1), which indicates a degree to which a material is closer to metal. A default value may be defined for the UI. |
| Roughness roughness | Smoothness (0.0) or roughness (1.0). A default value may be defined for the UI. |
| Reflectance reflectance | Reflectance. A default value (0.0) may be defined for the UI. |
| Emissive emissive | Simulated emissive surface (for example, a neon light). None by default. |
| NormalMap normal information | Direct factor in light reflection intensity and most important information for rendering. |

In some examples, different graphical controls may have different physical properties based on different application scenarios, styles, and appearances. As shown in Table 7, default values corresponding to different physical properties may be set in the system.

Optionally, for some specific application scenarios, or to achieve a design objective of a developer, or the like, different physical property values need to be assigned to a graphical control. Therefore, the electronic device needs to support the developer or the user in customizing physical properties. For example, the electronic device provides an API interface used to set different physical properties for a graphical control. Alternatively, the electronic device sets themes corresponding to different physical properties, and updates physical properties of a graphical control for different themes. Alternatively, the electronic device sets physical properties of a graphical control in a control declaration or a layout description.

For example, the following uses an example in which different physical properties of a graphical control are set by using an API interface. Through the API interface, a metallic (Metallic) property of the graphical control may be set to a default value, roughness (Roughness) is set to 0.2, and reflectance (Reflectance) is set to 0.1.

```
         <style name="Material Theme "parent="@android:
 style/Theme.Material.HarmonyMaterialLight"
            <item name="Matellic">?colorMatellic</item>
            <item name="Roughness">0.2</item>
            <item name="Reflectance">0.1</item>
         < /style>
```

In some embodiments, specific physical properties of pixels of some graphical controls may be different. Therefore, the electronic device may set the physical properties by using a map.

For example, in the foregoing description, the physical properties directly set by the electronic device in a plurality of manners are physical properties of each pixel of the graphical control. However, in different scenarios, physical properties of pixels of some graphical controls are different. For example, in a scenario in which a background of a graphical control includes a pattern, metallic, normal, and roughness of different pixels may vary.

For example, FIG. 17 is a diagram of display of metallic, normal, and roughness. For example, if the electronic device determines that roughness of each pixel of a metallic property of a current to-be-rendered graphical control is 0.2, the electronic device may set physical properties of the graphical control by using the foregoing API interface. For another example, as shown in FIG. 17, if the electronic device determines that different pixels of a current to-be-rendered graphical control have different metallic requirements, the electronic device may first generate a map, and then apply the map to a surface of the graphical control, to change displayed roughness of the graphical control. In other words, physical properties of the graphical control are configured to meet the requirement by using the map.

In some other embodiments, some physical properties of a graphical control may alternatively be automatically generated. For example, due to reasons such as relatively high difficulty in setting some physical properties of the graphical control, or low willingness of the developer to set the physical properties, the physical properties of the graphical control may be missing. Therefore, an image conversion algorithm may be preset in the electronic device, to automatically generate some or all physical properties of the graphical control.

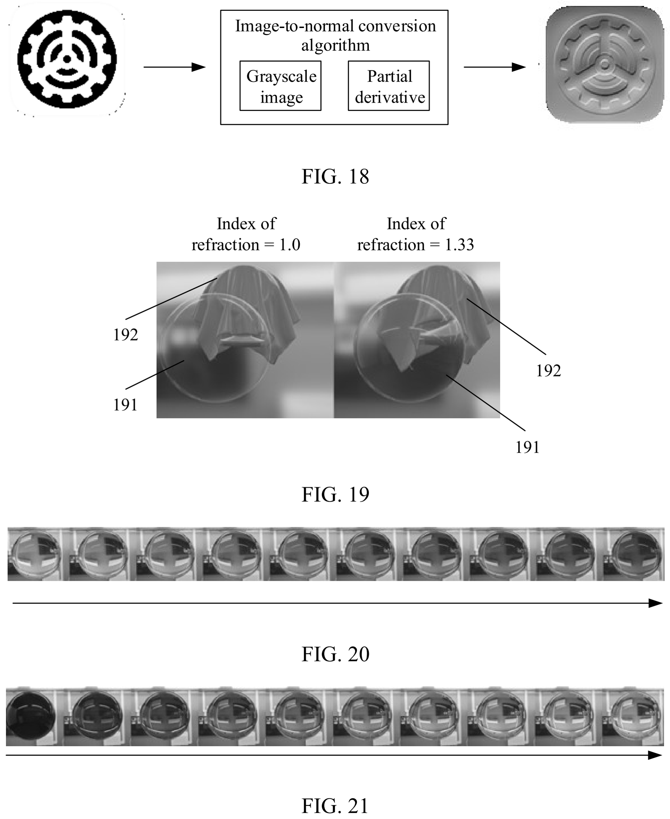

For example, normal information is an important part of the physical properties of the graphical control, and can explicitly enhance a lighting effect and a subtle three-dimensional effect generated by lighting. Therefore, in this embodiment of this application, a process of automatically generating normal information is used as an example to describe a process of automatically generating some physical properties of a graphical control. As shown in FIG. 18, based on original data of the graphical control, such as layout information and a Z-axis height, the electronic device generates a normal map or a height map by using the image conversion algorithm, to automatically output discovery information of the graphical control. Optionally, an implementation process of the image conversion algorithm includes: for example, after a grayscale image is input, performing partial derivative calculation based on the grayscale image, to output a corresponding display effect.

Optionally, the system-level light and shadow capability of the electronic device is implemented by using physical realistic lighting (for example, corresponding to the lighting information), the physical properties of the UI system, and the image light and shadow. The image light and shadow include providing a realistic colored projection capability for a translucent UI, generating a normal for an image, and the like.

The following describes content related to rendering of a translucent material.

In some embodiments, the electronic device may display various display interfaces, and these display interfaces include some translucent interfaces. For these translucent interfaces, the electronic device may perform rendering with reference to a translucent material in the real world. However, the translucent material has more physical properties. Therefore, for the translucent material, physical properties supported in a lighting rendering process of the electronic device need to be extended.

For example, Table 8 shows content of some extended physical properties of the translucent material, for example, including an index of refraction, transparency, absorption, and transmittance of the translucent material.

**Table 8**

| Parameter | Type | Range | Description |
|---|---|---|---|
| ior | float | [1..n] | Index of refraction |
| transmission | float | [0..1] | Diffuse amount of the translucent material and |
| | | | transparency of a surface material |
| absorption | float3 | [0..n] | Absorption |
| microThickness | float | [0..n] | Shell thickness of a hollow transmissive material |
| thickness | float | [0..n] | Thickness of a solid transmissive material |

For example, as shown in FIG. 19, materials with different indexes of refraction (index of refraction, IOR) may generate different refraction effects. For example, when the index of refraction is 1.0, no refraction effect is generated when an object 192 is observed through a translucent material 191. When the index of refraction is 1.33, a refraction effect is generated when the object 192 is observed through the translucent material 191. For example, a display position of the object 192 in the translucent material 191 deviates from an actual position of the object 192.

For another example, as shown in FIG. 20, in a process in which the absorption changes from (0.0, 0.02, 0.14) to (0.0, 0.36, 2.3), the translucent material generates different light absorption effects.

For another example, as shown in FIG. 21, in a process in which the transmittance changes from 0.0 to 1.0, the translucent material generates different light transmission effects.

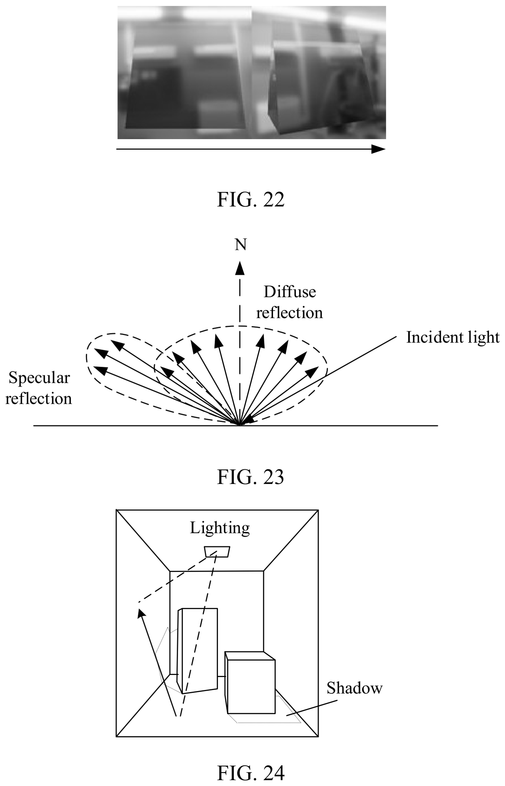

For another example, as shown in FIG. 22, when the thickness of the solid transmissive material changes from 0.0 to 3.0, the translucent material generates different light and shadow effects.

The foregoing describes content related to lighting, basic physical properties, and extended physical properties. The electronic device may output a visual feature based on lighting, a rendering equation, and a basic physical property. The following describes the rendering equation.

In some embodiments, in computer graphics, the rendering equation is an integral equation. The rendering equation is a theoretical basis for all global lighting methods (such as ray-tracing, path tracing, and radiosity). Rendering is to compute light radiation, and radiation is a basic characteristic of distribution of light in an environment.

In some embodiments, different rendering equations (which may also be described as lighting computation models) are preset in the electronic device, and a lighting rendering result is output in a lighting rendering process by using any one of the different rendering equations.

Optionally, based on a hardware capability, an application scenario, or the like of the electronic device, the developer or the system may select a rendering equation configured in the electronic device.

Optionally, the rendering equation includes, for example, a Blinn-Phong lighting model, a PBR lighting model, and a ray-tracing (Ray-Tracing) rendering model.

In some examples, the Blinn-Phong lighting model determines a final lighting effect based on lighting of a diffuse property and lighting of a specular lighting property. For example, Lighting (lighting) = Diffuse lighting (diffuse lighting) + Specular lighting (specular lighting). The diffuse lighting may be determined based on a light color (light color), a diffuse amount (diffuse amount), a normal (normal), and a light direction (direction). The specular lighting may be determined based on the light color (light color), a specular amount (specular amount), the normal (normal), and shininess (shininess). For example, Diffuse lighting = Light color * Diffuse amount * Dot(normal, light direction); and Specular lighting = Light color * Specular amount * Dot(normal, half way vector) ^ Shininess.

The Blinn-Phong lighting model achieves a relatively high computation speed and outputs a relatively good lighting rendering effect, and is widely used in the lighting rendering process. However, the Blinn-Phong lighting model is an empirical model, and cannot completely conform to a lighting phenomenon in the real world.

In some examples, as shown in FIG. 23, the PBR lighting model performs lighting rendering based on a principle of physical energy conservation in which incident light is equal to a sum of specularly reflected light and diffusely reflected light. The PBR lighting model is a lighting model closest to the real world. However, the PBR lighting model is relatively complex, has many evolution branches, and has many computational items.

In some examples, as shown in FIG. 24, a basic principle of a ray-tracing (Ray-Tracing) rendering model is as follows: A light source is assumed to emit a photon, and then the photon travels along a straight line until the photon hits a surface of an object. In this case, reflection and refraction occur, consuming a series of energy, and finally, the photon reaches a camera. The ray-tracing (Ray-Tracing) rendering model reverses all the foregoing by emitting a ray from the camera, to perform a process reverse to the foregoing process. In other words, the ray is emitted from the camera into a scene, and after reflection or refraction, finally hits the light source.

An effect of the ray-tracing (Ray-Tracing) rendering model is close to that of the real physical world, but computation is complex and computing power consumption is high. Generally, this model is used only in a scenario that has a high requirement on an effect or that requires a device to have high computing power. In other scenarios, the ray-tracing (Ray-Tracing) rendering model is used together with other rendering models.

In some embodiments, as described above, there is content of extended physical properties of the translucent material. In this case, the rendering equation may also be extended based on the extension of the physical properties of the translucent material.

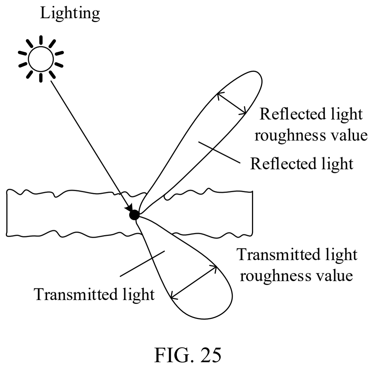

For example, as shown in FIG. 25, after light is incident on the translucent material, the translucent material generates transmitted light and reflected light for the light. Based on the translucent material, a transmitted light roughness value is generated for the transmitted light, and a reflected light roughness value is generated for the reflected light. In addition, after the light is incident on the translucent material, attenuation, impact of the thickness property, impact of the color and distance on absorption, and the like are generated. In this case, a rendering service performs lighting rendering based on a principle of the extended rendering equation shown in FIG. 25.

Optionally, the developer may select, based on factors such as performance of the electronic device, the rendering equation configured in the electronic device. Alternatively, a plurality of rendering equations are configured in the electronic device. When lighting rendering needs to be performed, the electronic device selects, based on a current status of the electronic device, an appropriate rendering equation to perform lighting rendering. For example, when lighting rendering needs to be performed, power of the electronic device is relatively sufficient. In this case, the electronic device may select a rendering equation that has a relatively good rendering effect but has a relatively high requirement on computing power.

The foregoing describes the rendering equation and the extended rendering equation. The following describes in detail a specific implementation process of lighting rendering.

In some embodiments, based on realistic physical lighting, shadow generation is related to basic requirements such as a physical property (such as a height) of a UI component, a light source position, a shape of the UI component, and a material of the UI component. The electronic device draws and renders a shadow based on the foregoing basic requirements for shadow generation. The lighting rendering process includes shadow rendering.

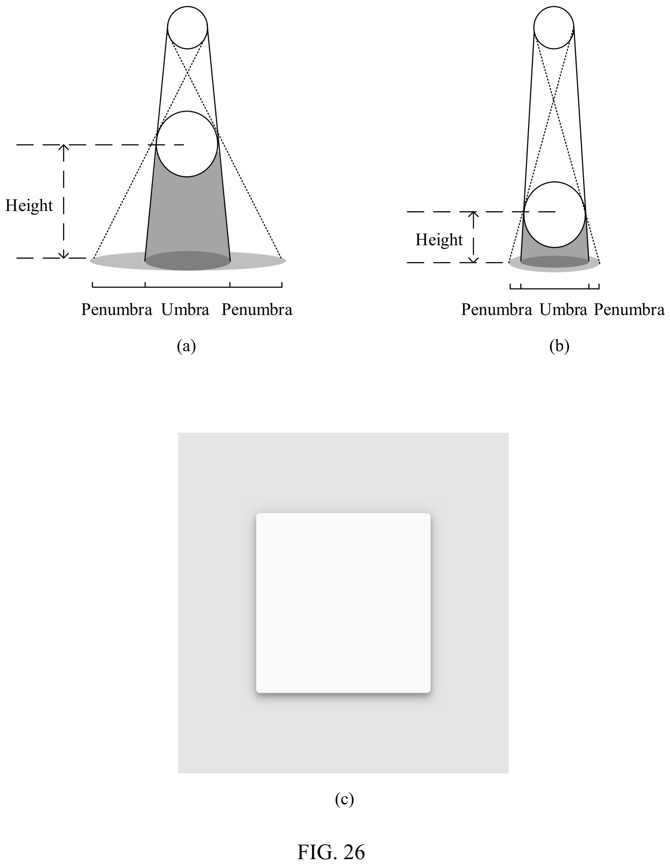

For example, shadow generation is related to the height of the UI component. As shown in (a) and (b) in FIG. 26, the shadow of the UI component includes an umbra and a penumbra. Given a same light source (with a same position, a same height, and the like), different shadow effects are generated for UI components with different heights. For example, the umbra of the UI component appears relatively solid, when the penumbra appears relatively soft. If the UI component is higher and closer to the light source, the penumbra of the UI component becomes larger and the shadow display effect becomes clearer. As shown in (c) in FIG. 26, in a rendering process of the UI component, the rendering service determines a corresponding shadow display effect based on the height of the UI component.

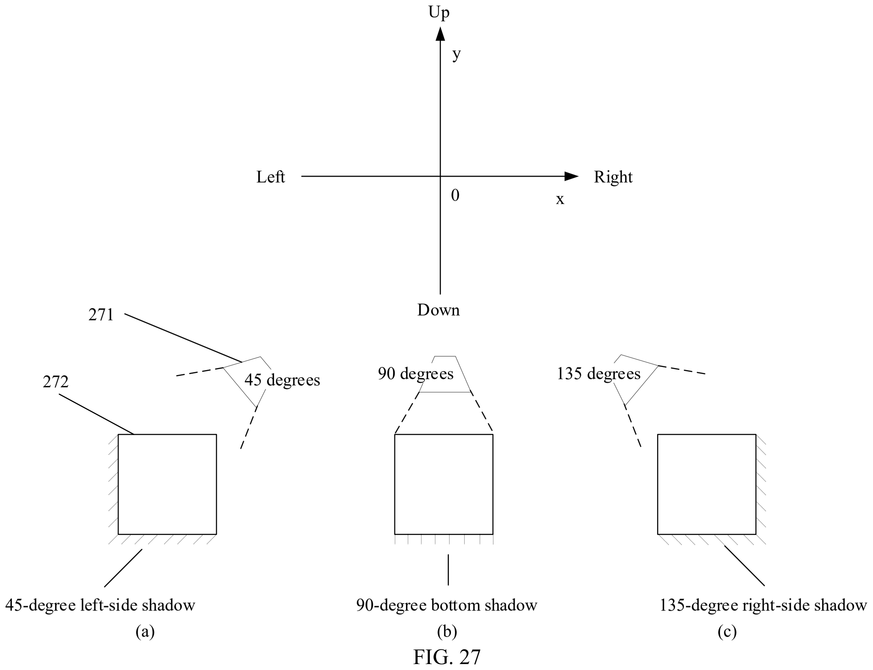

For another example, shadow generation is related to the light source position. As shown in FIG. 27, a position relationship between a light source and a UI component is illustrated based on a direction angle shown in an xy coordinate system. For example, as shown in (a) in FIG. 27, a light source 271 is located at a 45-degree angle relative to a UI component 272 (that is, the light source is located at the upper right of the UI component). In this case, the rendering system outputs a shadow of the UI component 272, and the shadow is a 45-degree left-side shadow (that is, the shadow is located at the lower left of the UI component). As shown in (b) in FIG. 27, the light source 271 is located at a 90-degree angle relative to the UI component 272 (that is, the light source is located directly above the UI component). In this case, the rendering system outputs a shadow of the UI component 272, and the shadow is a 90-degree bottom shadow (that is, the shadow is located directly below the UI component). As shown in (c) in FIG. 27, the light source 271 is located at a 135-degree angle relative to the UI component 272 (that is, the light source is located at the upper left of the UI component). In this case, the rendering system outputs a shadow of the UI component 272, and the shadow is a 135-degree right-side shadow (that is, the shadow is located at the lower right of the UI component).

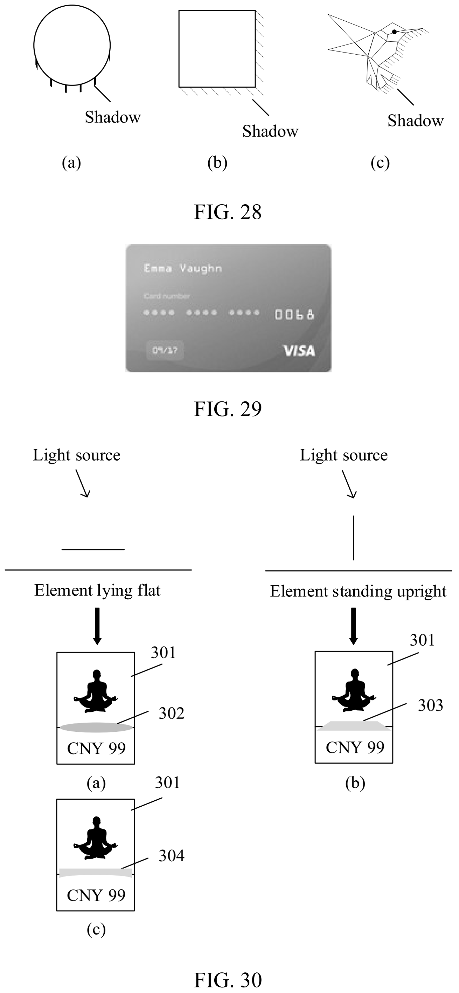

For another example, shadow generation is related to the shape of the UI component. The rendering system may output shadow display effects in corresponding different shapes based on different shapes of the UI component. In addition to supporting shadow rendering for circular and rounded rectangular shapes, the rendering system further supports shadow rendering for various irregular shapes. For example, as shown in (a) in FIG. 28, the rendering system completes shadow rendering for a circular UI component. For example, as shown in (b) in FIG. 28, the rendering system completes shadow rendering for a square UI component. For example, as shown in (c) in FIG. 28, the rendering system completes shadow rendering for a bird-shaped (irregularly shaped) UI component.

For another example, shadow generation is related to the material of the UI component. For example, if the translucent material supports projection of a color, a shadow color is similar to the color of the UI component made of the translucent material. As shown in FIG. 29, a color of a card to be rendered by the electronic device is blue, and a material of the card is a translucent material. In this case, the rendering service may draw a light blue shadow based on the color and the material of the UI component (that is, the card), so that a shadow display effect is more consistent with a shadow effect in the real physical world, thereby improving user experience.

In some embodiments, different light sources and physical properties can bring different shadow effects, and the rendering service determines a shadow rendering effect based on the light sources and the physical properties.

In some examples, given a same light source and a same UI component, different shadow rendering effects may be output, depending on a position and shape of the UI component.

For example, as shown in FIG. 30, based on a same light source (for example, with a same light source type, a same light emission direction, and the like), the rendering service outputs different shadow rendering effects when an element lies flat and an element stands upright. For example, as shown in (a) in FIG. 30, an element 301 is a current commodity display window on which shadow rendering is to be performed. Based on a flat-lying state of the element 301, the rendering service outputs an elliptical shadow rendering effect shown in a reference sign 302. Alternatively, as shown in (b) in FIG. 30, as the element 301 transitions from the flat-lying state to an upright state, the rendering service causes the shadow of the element 301 to change from an ellipse to an elongated rectangle, as shown in a reference sign 303.

In some examples, given different light source types, different shadow rendering effects may be output for a same UI component. For example, as shown in (a) in FIG. 30, based on the flat-lying state of the element 301 and a natural ambient light source, the rendering service outputs the elliptical shadow rendering effect shown in the reference sign 302. As shown in (c) in FIG. 30, based on the flat-lying state of the element 301 and a spotlight source, the rendering service outputs a bending rectangular shadow rendering effect shown in a reference sign 304.

In this way, the rendering service brings different shadow effects based on different light sources and physical properties, enriches GUI interface display, and improves user experience.

In some embodiments, the electronic device may further preset a shadow rendering algorithm to simulate a physical realistic shadow of the UI component based on the shadow rendering algorithm. Optionally, based on shadow simulation, a 3D shadow display effect may be achieved for a 2D GUI interface.

Optionally, the shadow rendering algorithm includes, for example, a shadow map (ShadowMap) algorithm, a percentage closer filtering (percentage closer filtering, PCF) algorithm, or a percentage closer soft shadows (percentage closer soft shadows, PCSS) algorithm.

For example, the rendering service determines, based on a depth map of the UI component and by using the shadow map algorithm, positions reachable by light of the light source, to output a corresponding shadow rendering effect.

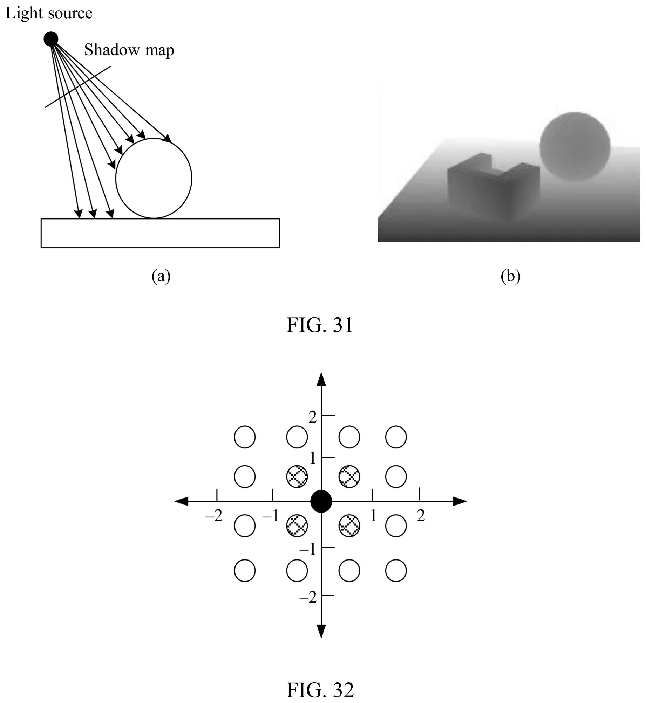

For example, as shown in (a) in FIG. 31, the UI component on which shadow rendering is to be performed includes different objects. Therefore, the electronic device may obtain the depth map of the UI component. Therefore, the electronic device may determine, based on the depth map and by using the shadow map algorithm, whether different positions on the UI component are positions reachable by the light of the light source, to output a corresponding shadow effect. For example, as shown in (b) in FIG. 31, based on the foregoing principle, the electronic device may output a shadow rendering effect of the current UI component.

For another example, the rendering service samples pixels around a shadow by using the PCF algorithm, and performs mean filtering based on a percentage. In this way, a shadow edge processed by the PCF is blurred, and there is no severe aliasing, so that a better shadow display effect is obtained.

For example, as shown in FIG. 32, an origin of the coordinate system is a shadow center position, and circles at different circle layers indicate distances from the shadow center position. In this case, in the shadow rendering process, the rendering service samples pixels around the shadow based on distances between different shadow positions and the shadow center position, and performs mean filtering based on a percentage, to output a shadow rendering effect.

In some examples, although several shadow rendering algorithms in the foregoing examples can output a shadow rendering effect required by the user, these shadow rendering algorithms have problems such as relatively high computing power, a poor shadow rendering effect, or no support for a colored shadow. Based on this, the following describes three shadow rendering methods, to achieve a realistic shadow display effect in a 2D GUI scene.

For example, the rendering service may determine a shadow offset and a direction based on coordinates of the light source and the height of the UI component, to output a shadow rendering effect.

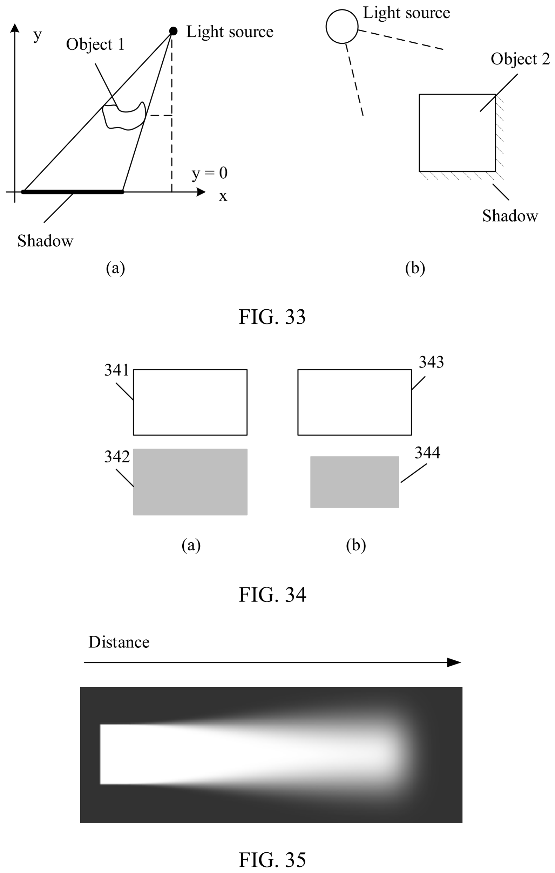

For example, in a diagram of a coordinate system shown in (a) in FIG. 33, the rendering service may determine coordinates of a light source and coordinates of an object 1 (that is, a UI component), and may obtain a height of the object 1. In this case, the rendering system may perform shadow rendering. For example, as shown in (b) in FIG. 33, the rendering service performs shadow rendering on an object 2 based on a principle shown in (a) in FIG. 33, and a shadow rendering effect can reflect a shadow effect in the real physical world.

For another example, the rendering service may copy original content to construct a shadow map. Then a PCF soft shadow effect is achieved through blurring.

For example, as shown in (a) in FIG. 34, after copying a UI component and constructing a shadow map 341, the rendering service obtains, through blurring, a shadow rendering effect shown in a reference sign 342.

For another example, as shown in (b) in FIG. 34, after copying a UI component and constructing a shadow map 343, the rendering service processes the shadow map 343 through blurring, and then reduces a blur layer, thereby obtaining a shadow rendering effect shown in a reference sign 344.

For another example, the rendering service uses a progressive blur algorithm to achieve a soft shadow rendering effect.

For example, as shown in FIG. 35, in a shadow rendering process, a shadow of a UI component is blurred by using the progressive blur algorithm, where a longer distance from the UI component indicates a higher degree of blurring, thereby achieving a soft shadow rendering effect.

In some embodiments, in a lighting rendering process, for a translucent material, the rendering service may construct an effect of a translucent material such as frosted glass, ribbed glass, or acrylic glass with reference to a material property of the translucent material and realistic physical lighting. In this way, a display effect of a UI component made of the translucent material in a GUI interface of the electronic device is more consistent with an effect expected by the user. For example, when a picture to be displayed on an interface is a glass partition door, the electronic device renders the current picture with reference to material properties of the translucent material and realistic physical lighting, to achieve a final display effect of ribbed glass.

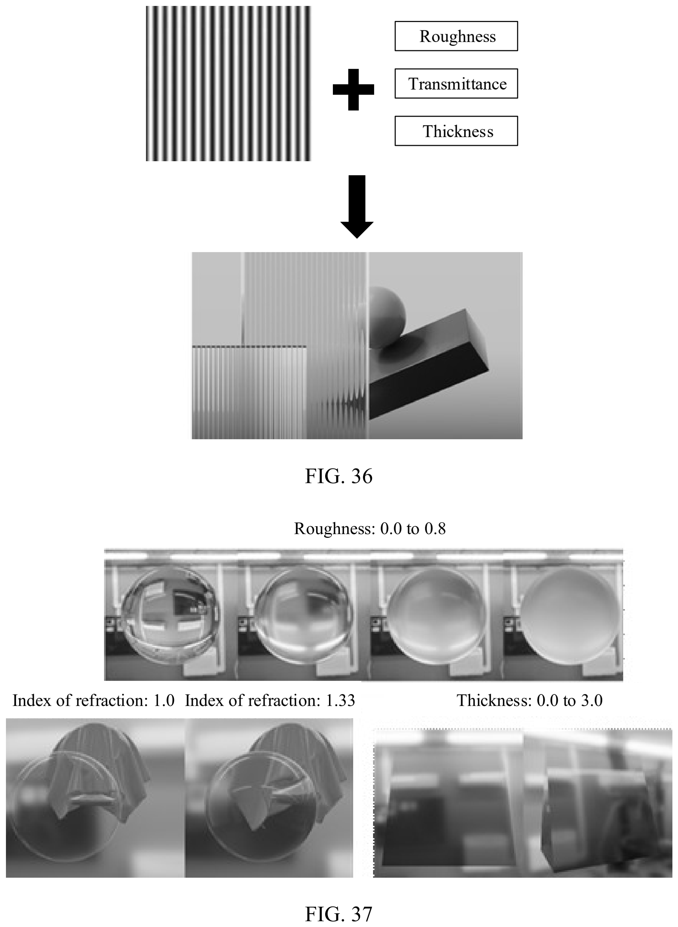

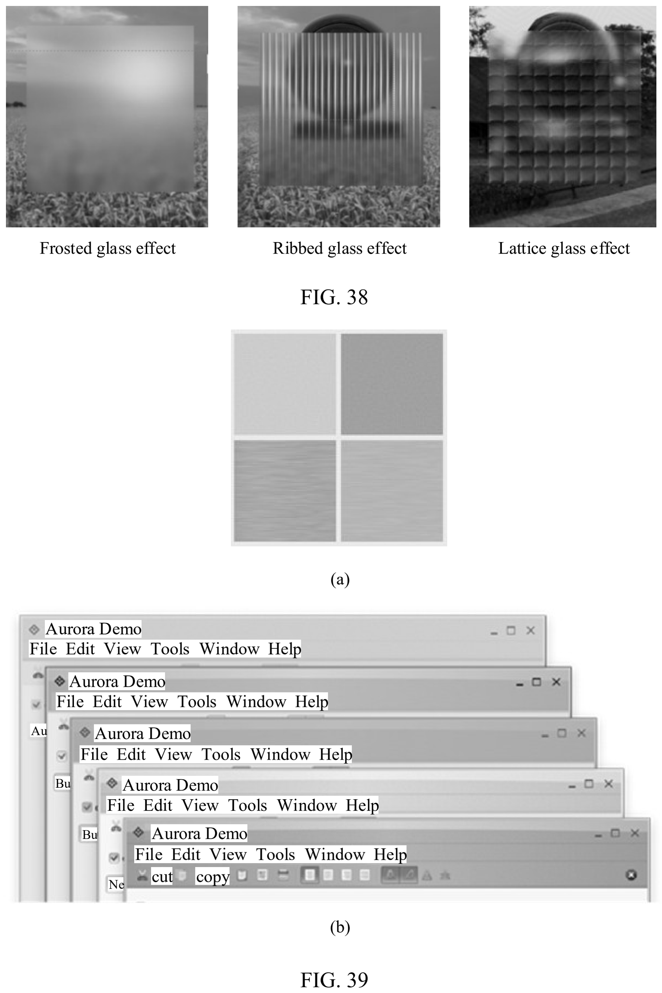

For example, FIG. 36 is a diagram of a principle of ribbed glass. The electronic device combines at least one of the roughness, transmittance, and thickness of the translucent material with an index of refraction map of the translucent material, to output effects of various glass materials. FIG. 37 is a diagram illustrating translucent materials with different roughness, different transmittance, and different thicknesses. Based on the principle shown in FIG. 36 and different physical properties shown in FIG. 37, a frosted glass effect, a ribbed glass effect, and a lattice glass effect shown in FIG. 38 may be achieved for the UI component displayed by the electronic device.

In some embodiments, in a lighting rendering process, the electronic device may further construct, based on lighting and materials of UI components, display effects for applications or application windows using various translucent materials. For example, the electronic device may construct a window display effect such as paper, metal, leather, or colored glass. For example, as shown in (a) in FIG. 39, the electronic device constructs various translucent materials based on lighting and materials of UI components, to achieve window display effects of different translucent materials shown in (b) in FIG. 39.

In this way, through construction of display effects of translucent materials, GUI display becomes richer and user requirements are met.

The foregoing describes a specific implementation principle and process of the light and shadow effect display method provided in embodiments of this application. The following describes an example of a display effect of a GUI interface of an electronic device after lighting rendering is performed based on the light and shadow effect display method.

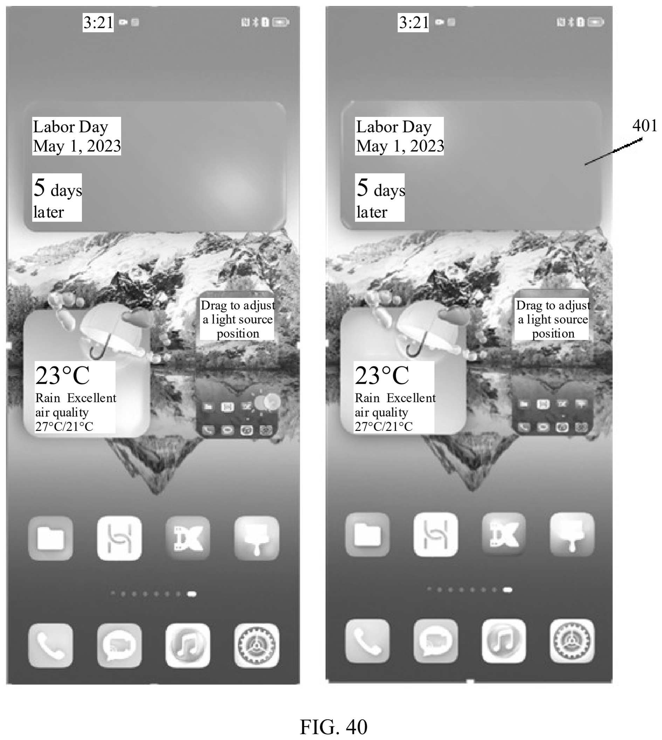

For example, as shown in FIG. 40, the electronic device displays a home screen, and content such as a calendar card, a weather card, and an application icon is displayed on the home screen. It can be learned that lighting effects on the calendar card, the weather card, and the application icon noticeably change with time. For example, a position of a lighting point on a calendar card 401 changes with the time. Alternatively, the electronic device may adjust a shadow position, size, and the like of a card based on a lighting position. Alternatively, the electronic device outputs a shadow of a similar color with reference to a card color.

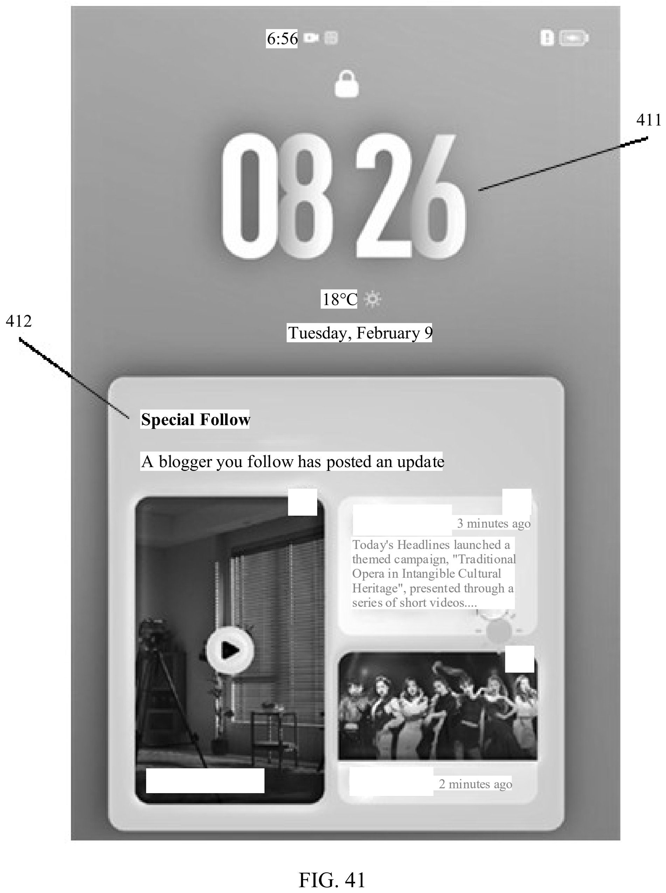

For another example, as shown in FIG. 41, the electronic device displays a lock screen, and information such as the time, temperature, date, and recommended content is displayed on the lock screen. As shown in a reference sign 411, the electronic device displays a clear light and shadow effect of a time component based on a height of the time component on a Z-axis in combination with positions reachable by light of a light source. In addition, as a posture of the electronic device changes, the electronic device may change a light and shadow display effect of an interface based on posture detection by a sensor. Alternatively, the electronic device generates, by using normal information of a text component, a subtle three-dimensional effect for the text component, as shown in a reference sign 412.

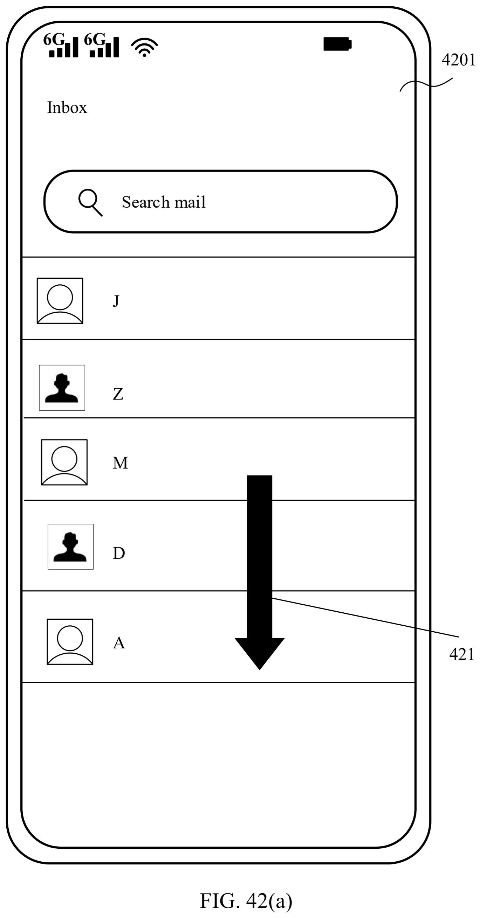

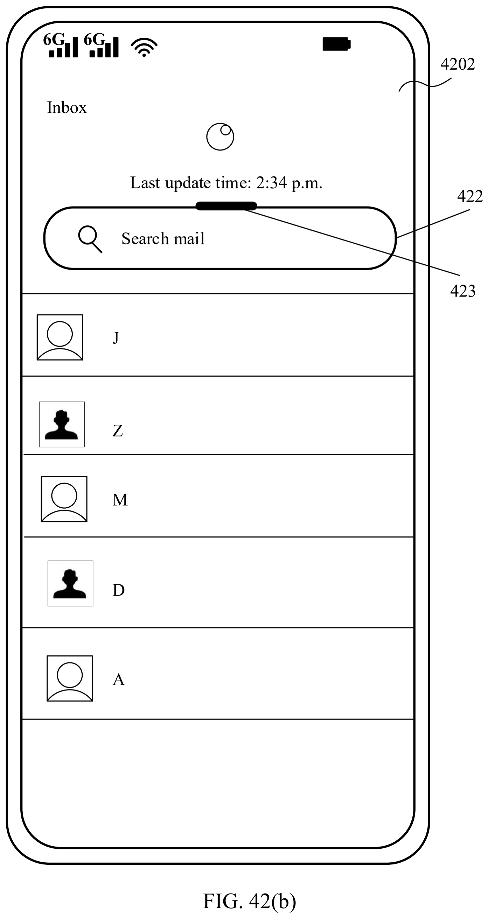

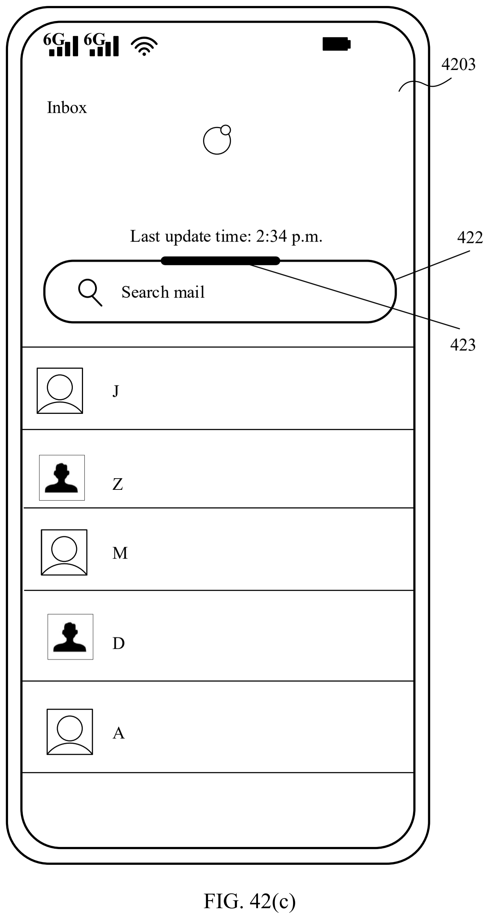

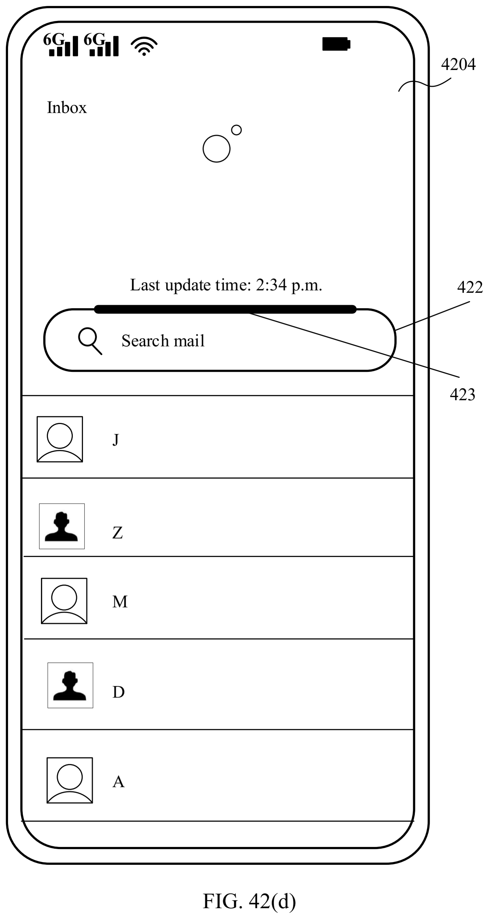

For another example, FIG. 42(a) to FIG. 42(d) show a light and shadow change on a GUI interface in a mail refreshing scenario. As shown in an interface 4201 shown in FIG. 42(a), in a process of displaying an email application, the electronic device detects a swipe-down operation performed by the user on the interface 4201 along a direction shown by an arrow 421, and triggers refreshing of a currently displayed mailing list. In a swipe-down process, as shown in an interface 4202 shown in FIG. 42(b), the electronic device determines, based on lighting information and current display information, to perform lighting rendering on a search bar 422. As shown in the interface 4202, the electronic device displays a shadow 423 above the search bar 422. In addition, as shown in an interface 4203 shown in FIG. 42(c) and an interface 4204 shown in FIG. 42(d), a length of the shadow 423 displayed above the search bar 422 also increases as a swipe-down distance of the user increases. Therefore, in a process of refreshing the mailing list by the user, the shadow change enables the user to have a deeper understanding about details, and better human-machine interaction experience is provided for the user.

Optionally, when detecting that the user terminates the swipe-down operation, the electronic device may restore display of the mailing list interface in an order of the interface 4204, the interface 4203, the interface 4202, and the interface 4201. In addition, in this process, the electronic device may gradually reduce the length of the shadow 423 displayed above the search bar 422. In this way, in a process of refreshing and restoring the mailing list, better human-machine interaction experience may also be provided for the user through the shadow change.

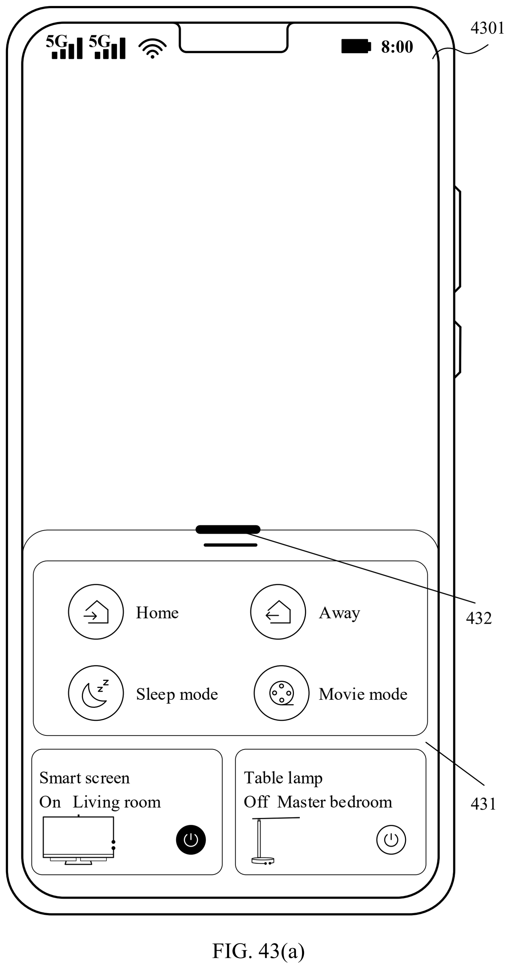

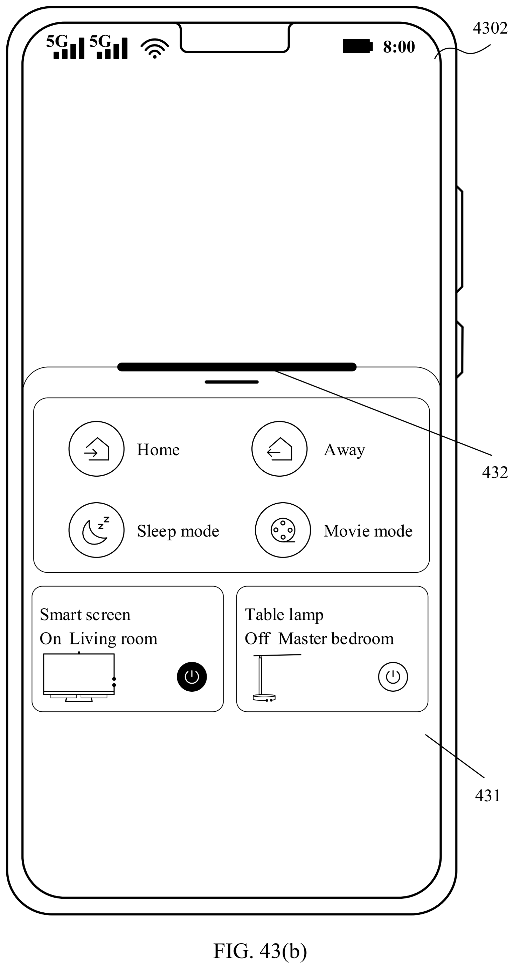

For another example, FIG. 43(a) and FIG. 43(b) show a light and shadow change on a GUI interface in a pull-up menu activation scenario. As shown in an interface 4301 shown in FIG. 43(a), the electronic device detects a drag-up operation of the user from the bottom of the display, and displays a pull-up menu. In a process of drawing and rendering the pull-up menu, the electronic device determines, based on the lighting information and current display information, to perform lighting rendering on the pull-up menu 431. As shown in the interface 4301, the electronic device displays a shadow 432 above the pull-up menu 431. In addition, as shown in the interface 4301 and an interface 4302 shown in FIG. 43(b), a length of the shadow 432 displayed above the pull-up menu 431 also increases as a drag-up distance of the user increases. In this way, when the user drags up a menu bar, better human-machine interaction experience is provided for the user through the shadow change.

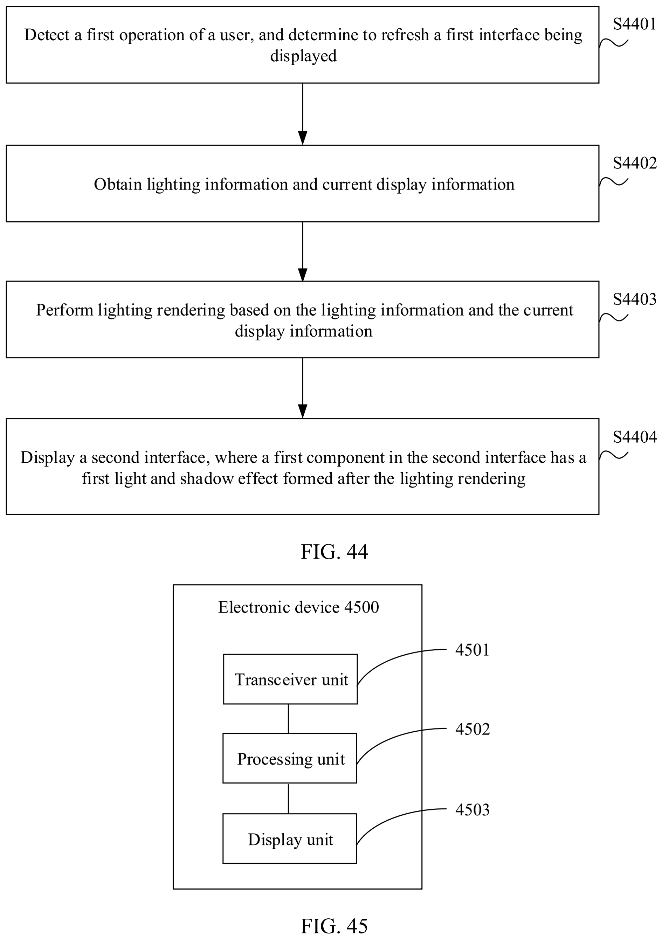

FIG. 44 is a schematic flowchart of a display processing method according to an embodiment of this application. It should be noted that the method is not limited to a specific sequence described in FIG. 44 and the following descriptions. It should be understood that, in other embodiments, a sequence of some steps in the method may be interchanged based on an actual requirement, or some steps in the method may be omitted or deleted. The method includes the following steps.

S4401: An electronic device detects a first operation of a user, and determines to refresh a first interface being displayed.

The first operation is, for example, a user operation for instructing to display a home screen, a user operation for refreshing current interface display (for example, a swipe operation on an interface), or a user operation for instructing to jump to another application interface. Alternatively, the first operation may be an unlocking operation. In this case, the first interface is a screen locking operation, and a refreshed second interface is an unlocked screen.

S4402: The electronic device obtains lighting information and current display information.

The lighting information is a preconfigured global illumination definition. The global illumination definition indicates one or more of a physical lighting principle, a lighting type, a lighting property, a scene lighting effect, a lighting model, a lighting material, and a shadow property in a real world.

The current display information includes one or more of current time information, location information, motion state information, interface virtual light source information, component height information, component material information, and component transparency information of the electronic device.

In some embodiments, a developer may preconfigure the lighting information in the electronic device. When determining that the interface display needs to be refreshed, the electronic device may obtain locally stored lighting information, and obtain the current display information.

S4403: The electronic device performs lighting rendering based on the lighting information and the current display information.

In some embodiments, after obtaining the lighting information and the current display information, the electronic device performs lighting rendering on a first component in a next frame of to-be-displayed image.

In some examples, as shown in FIG. 8, a rendering process of the first component includes rendering of a border, rendering of a lighting layer, rendering of a user interface canvas, rendering of a surface layer, and rendering of a shadow hosting layer, where the rendering of the border is used to draw at least one of an emissive edge effect, a specular edge effect, and an outline effect of the first component; the lighting layer is used to receive lighting and complete lighting drawing corresponding to the first component; the user interface canvas is used to complete drawing of style content of the first component; the surface layer is used to draw a display container of the first component; and the shadow hosting layer is used to carry a layer shadow and overflow lighting drawing.

In some embodiments, the electronic device outputs a visual feature based on light source information indicated by the lighting information and the current display information, a rendering equation, and a basic physical property, where the visual feature includes one or more of color information, projection information, and physical material information.

Optionally, the light source information includes the lighting type and the lighting property. The basic physical property includes one or more of a base color, metallic, roughness, reflectance, emissive, normal information, an index of refraction, transparency, absorption, and transmittance.

For example, for some specific application scenarios, or to achieve a design objective of the developer, or the like, different physical property values need to be assigned to a component. Therefore, the electronic device needs to support the developer or the user in customizing physical properties. For example, the electronic device provides an API interface used to set different physical properties for a component. Alternatively, the electronic device sets themes corresponding to different physical properties, and updates physical properties of a component for different themes. Alternatively, the electronic device sets physical properties of a component in a control declaration or a layout description. In some embodiments, the light and shadow effect includes a shadow rendering effect, and the shadow rendering effect corresponds to one or more of a height of the first component, a light source position, a shape of the first component, and a material of the first component. The shape of the first component is a regular shape or an irregular shape.

For example, the shadow rendering effect is related to the height of the first component. As shown in (a) and (b) in FIG. 26, a shadow of the first component includes an umbra and a penumbra. Given a same light source (with a same position, a same height, and the like), different shadow effects are generated for first components with different heights. For example, the umbra of the first component appears relatively solid, when the penumbra appears relatively soft. If the first component is higher and closer to the light source, the penumbra of the first component becomes larger and the shadow display effect becomes clearer. As shown in (c) in FIG. 26, in a rendering process of the first component, the electronic device determines a corresponding shadow display effect based on the height of the first component.

For another example, the shadow rendering effect is related to the light source position. As shown in FIG. 27, a position relationship between a light source and a first component (for example, a UI component) is shown based on a direction angle shown in an xy coordinate system. For example, as shown in (a) in FIG. 27, a light source 271 is located at a 45-degree angle relative to a UI component 272 (that is, the light source is located at the upper right of the UI component). In this case, a rendering system outputs a shadow of the UI component 272, and the shadow is a 45-degree left-side shadow (that is, the shadow is located at the lower left of the UI component). As shown in (b) in FIG. 27, the light source 271 is located at a 90-degree angle relative to the UI component 272 (that is, the light source is located directly above the UI component). In this case, the rendering system outputs a shadow of the UI component 272, and the shadow is a 90-degree bottom shadow (that is, the shadow is located directly below the UI component). As shown in (c) in FIG. 27, the light source 271 is located at a 135-degree angle relative to the UI component 272 (that is, the light source is located at the upper left of the UI component). In this case, the rendering system outputs a shadow of the UI component 272, and the shadow is a 135-degree right-side shadow (that is, the shadow is located at the lower right of the UI component).

For another example, the shadow rendering effect is related to the shape of the first component. The rendering system may output shadow display effects in corresponding different shapes based on different shapes of the first component. In addition to supporting shadow rendering for circular and rounded rectangular shapes, the rendering system further supports shadow rendering for various irregular shapes. For example, as shown in (a) in FIG. 28, the rendering system completes shadow rendering for a circular UI component. For example, as shown in (b) in FIG. 28, the rendering system completes shadow rendering for a square UI component. For example, as shown in (c) in FIG. 28, the rendering system completes shadow rendering for a bird-shaped (irregularly shaped) UI component.

For another example, the shadow rendering effect is related to the material of the first component. For example, if a translucent material supports projection of a color, a shadow color is similar to the color of the first component made of the translucent material. As shown in FIG. 29, the color of the first component to be rendered by the electronic device is blue, and the material of the first component is a translucent material. In this case, the electronic device may draw a light blue shadow based on the color and the material of the first component, so that a shadow display effect is more consistent with a shadow effect in a real physical world, thereby improving user experience.

In some examples, the electronic device determines a shadow offset and a direction based on light source coordinates indicated by the lighting information and the current display information, and the height of the first component, and obtains the shadow rendering effect.

In some other examples, the electronic device copies the first component, and creates a shadow map; and obtains the shadow rendering effect by performing blurring processing on the shadow map.

In some other examples, the electronic device obtains the shadow rendering effect based on the lighting information and the current display information by using a shadow rendering algorithm.

In this way, the electronic device brings different shadow rendering effects based on different light sources and physical properties, enriches GUI interface display, and improves user experience.

In addition, when the shape of the first component is relatively complex, the electronic device may also generate a light and shadow effect of the first component in the complex shape with reference to the lighting information and the current display information, to enrich interface display.

S4404: The electronic device displays a second interface, where a first component in the second interface has a first light and shadow effect formed after the lighting rendering.

In some embodiments, after the second electronic device performs the lighting rendering on the first component, the first component displayed in the refreshed interface can have a rendering effect formed after the lighting rendering.

In some examples, the light and shadow effect includes the shadow rendering effect.

In some other examples, when the material of the first component is a translucent material, the light and shadow effect includes one or more of a frosted glass effect, a ribbed glass effect, and an acrylic glass effect. In this way, when the first component is made of a translucent material, the electronic device may also generate, with reference to the lighting information and the current display information, the light and shadow effect of the first component made of the translucent material, to enrich interface display.

In this way, with reference to the lighting information and the current display information, the electronic device provides a GUI light and shadow effect that better meets a user requirement for the user, thereby improving user experience.

In addition, subconscious familiarity of humans with a lighting system can avoid increasing learning costs and improve user acceptance. In addition, an effect of the lighting system aligns with human perception, and is easily accepted by the user when improving exquisiteness and aesthetics of the GUI interface.

The light and shadow effect display method provided in embodiments of this application is described in detail above with reference to FIG. 6 to FIG. 44. The following describes in detail an electronic device provided in an embodiment of this application with reference to FIG. 45.

In a possible design, FIG. 45 is a diagram of a structure of an electronic device according to an embodiment of this application. As shown in FIG. 45, the electronic device 4500 may include a transceiver unit 4501, a processing unit 4502, and a display unit 4503. The electronic device 4500 may be configured to implement a function of the electronic device in the foregoing method embodiments.

Optionally, the transceiver unit 4501 is configured to support the electronic device 4500 in performing S4401 in FIG. 44.

Optionally, the processing unit 4502 is configured to support the electronic device 4500 in performing S4401, S4402, and S4403 in FIG. 44.

Optionally, the display unit 4503 is configured to support the electronic device 4500 in performing S4404 in FIG. 44.

The transceiver unit may include a receiving unit and a sending unit, may be implemented by a transceiver or a transceiver-related circuit component, and may be a transceiver or a transceiver module. Operations and/or functions of the units in the electronic device 4500 are respectively intended to implement corresponding processes of the light and shadow effect display method in the foregoing method embodiments. All related content of the steps in the foregoing method embodiments may be referenced in function descriptions of corresponding functional units. For brevity, details are not described herein again.

Optionally, the electronic device 4500 shown in FIG. 45 may further include a storage unit (not shown in FIG. 45), and the storage unit stores a program or instructions. When the transceiver unit 4501, the processing unit 4502, and the display unit 4503 execute the program or the instructions, the electronic device 4500 shown in FIG. 45 is enabled to perform the light and shadow effect display method in the foregoing method embodiments.

For technical effects of the electronic device 4500 shown in FIG. 45, refer to the technical effects of the light and shadow effect display method in the foregoing method embodiments. Details are not described herein again.

In addition to the form of the electronic device 4500, the technical solution provided in this application may also be a functional unit or a chip in the electronic device, or an apparatus used in combination with the electronic device.

An embodiment of this application further provides a chip system, including a processor. The processor is coupled to a memory. The memory is configured to store a program or instructions. When the program or the instructions is/are executed by the processor, the chip system is enabled to implement the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processing circuit (digital signal processor, DSP), a micro controller (micro controller unit, MCU), a programmable controller (programmable logic device, PLD), or another integrated chip.

It should be understood that the steps of the foregoing method embodiments may be completed by using a hardware integrated logic circuit in the processor or by using instructions in a form of software. The steps of the methods disclosed with reference to embodiments of this application may be directly performed and completed by a hardware processor, or may be performed and completed by using a combination of hardware in the processor and a software module.

An embodiment of this application further provides a computer-readable storage medium. The computer-readable storage medium stores a computer program. When the computer program runs on a computer, the computer is enabled to perform the foregoing related steps, to implement the light and shadow effect display method in the foregoing embodiments.

An embodiment of this application further provides a computer program product. When the computer program product is run on a computer, the computer is enabled to perform the foregoing related steps, to implement the light and shadow effect display method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by the one or more processors, the apparatus is enabled to perform the light and shadow effect display method in the foregoing method embodiments.

The apparatus, the computer-readable storage medium, the computer program product, or the chip provided in embodiments of this application is configured to perform the corresponding method provided above. Therefore, for beneficial effects that can be achieved, refer to beneficial effects in the corresponding method provided above, and details are not described herein again.

Method or algorithm steps described with reference to content disclosed in embodiments of this application may be implemented by hardware, or may be implemented by a processor by executing software instructions. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk drive, a removable hard disk, a compact disc read-only memory (CD-ROM), or any other form of storage medium well-known in the art. For example, the storage medium is coupled to the processor, so that the processor can read information from the storage medium or write information into the storage medium. Certainly, the storage medium may alternatively be a component of the processor. The processor and the storage medium may be located in an application-specific integrated circuit (application-specific integrated circuit, ASIC).

Based on the descriptions of the foregoing implementations, a person skilled in the art can clearly understand that, for ease and brevity of description, division into the foregoing functional modules is merely an example for description. During actual application, the foregoing functions may be allocated to different functional modules for implementation according to a requirement. To be specific, an internal structure of the apparatus is divided into different functional modules to implement all or some of the functions described above. For a specific working process of the foregoing system, apparatus, and unit, refer to a corresponding process in the foregoing method embodiments, and details are not described herein again.

In the several embodiments provided in this application, it should be understood that the disclosed methods may be implemented in other manners. The apparatus embodiment described above is merely an example. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in an electronic form, a mechanical form, or another form.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The computer-readable storage medium includes but is not limited to any one of the following: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A light and shadow effect display method, applied to an electronic device, wherein the method comprises:
detecting a first operation of a user, and determining to refresh a first interface being displayed;
obtaining lighting information and current display information, wherein the lighting information is a preconfigured global illumination definition;
performing lighting rendering based on the lighting information and the current display information; and
displaying a second interface, wherein a first component in the second interface has a light and shadow effect formed after the lighting rendering.

2. The method according to claim 1, wherein the global illumination definition indicates one or more of a physical lighting principle, a lighting type, a lighting property, a scene lighting effect, a lighting model, a lighting material, and a shadow property in a real world.

3. The method according to claim 1 or 2, wherein the current display information comprises one or more of current time information, location information, motion state information, interface virtual light source information, component height information, component material information, and component transparency information of the electronic device.

4. The method according to any one of claims 1 to 3, wherein a rendering process of the first component comprises rendering of a border, rendering of a lighting layer, rendering of a user interface canvas, rendering of a surface layer, and rendering of a shadow hosting layer, wherein the rendering of the border is used to draw at least one of an emissive edge effect, a specular edge effect, and an outline effect of the first component; the lighting layer is used to receive lighting and complete lighting drawing corresponding to the first component; the user interface canvas is used to complete drawing of style content of the first component; the surface layer is used to draw a display container of the first component; and the shadow hosting layer is used to carry a layer shadow and overflow lighting drawing.

5. The method according to any one of claims 1 to 4, wherein performing lighting rendering based on the lighting information and the current display information comprises:
outputting a visual feature based on light source information indicated by the lighting information and the current display information, a rendering equation, and a basic physical property, wherein the visual feature comprises one or more of color information, projection information, and physical material information.

6. The method according to claim 5, wherein the light source information comprises the lighting type and the lighting property; and the basic physical property comprises one or more of a base color, metallic, roughness, reflectance, emissive, normal information, an index of refraction, transparency, absorption, and transmittance.

7. The method according to any one of claims 1 to 6, wherein the light and shadow effect comprises a shadow rendering effect, the shadow rendering effect corresponds to one or more of a height of the first component, a light source position, a shape of the first component, and a material of the first component, and the shape of the first component is a regular shape or an irregular shape.

8. The method according to claim 7, wherein performing lighting rendering based on the lighting information and the current display information comprises:
determining a shadow offset and a direction based on light source coordinates indicated by the lighting information and the current display information, and the height of the first component, and obtaining the shadow rendering effect;
or
copying the first component, and creating a shadow map; and
obtaining the shadow rendering effect by performing blurring processing on the shadow map; or
obtaining the shadow rendering effect based on the lighting information and the current display information by using a shadow rendering algorithm.

9. The method according to any one of claims 1 to 8, wherein when the material of the first component is a translucent material, the light and shadow effect comprises one or more of a frosted glass effect, a ribbed glass effect, and an acrylic glass effect.

10. An electronic device, comprising a processor, a memory, and a display, wherein the memory and the display are coupled to the processor, the memory is configured to store computer program code, the computer program code comprises computer instructions, and when the processor reads the computer instructions from the memory, the electronic device is enabled to perform the method according to any one of claims 1 to 9.

11. A computer-readable storage medium, wherein the computer-readable storage medium comprises a computer program, and when the computer program runs on an electronic device, the electronic device is enabled to perform the method according to any one of claims 1 to 9.

12. A computer program product, wherein when the computer program product is run on a computer, the computer is enabled to perform the method according to any one of claims 1 to 9.
